# EUROPEAN PATENT APPLICATION

(11) **EP 4 024 807 A1**
(43) Date of publication of application: **06.07.2022**
(21) Application number: 20866716.2
(22) Date of filing: 16.09.2020
(51) Int. Cl.: H04L 29/06, H04L 12/761

(54) **MESSAGE SENDING METHOD AND APPARATUS**

(30) Priority: 17.09.2019 CN 201910874831
(71) Applicant: Huawei Technologies Co., Ltd., Longgang District Shenzhen, Guangdong 518129 (CN)
(72) Inventor: XIE, Jingrong, Shenzhen, Guangdong 518129 (CN); LIU, Yisong, Shenzhen, Guangdong 518129 (CN); XIA, Yang, Shenzhen, Guangdong 518129 (CN)
(74) Representative: MERH-IP Matias Erny Reichl Hoffmann Patentanwälte PartG mbB
(86) International application number: PCT/CN2020/115702
(87) International publication number: WO 2021/052381

(57) **Abstract**

This application provides a packet sending method. The method is applied to an MVPN, and the MVPN includes a first network device and a second network device. The method includes: The first network device receives a first packet sent by a first CE, where the first packet includes a first IPv6 header and a first payload, and the first IPv6 header includes a first SA and a first DA; determines, according to a first entry, a first address identifier corresponding to the first SA and the first DA, where the first entry includes a correspondence between the first SA and the first DA and the first address identifier; updates the first IPv6 header in the first packet to a second IPv6 header to obtain a second packet, where the second IPv6 header does not include a first SA field and a first DA field; encapsulates the second packet by using the first address identifier to obtain a first encapsulated packet, where the first encapsulated packet includes the first address identifier, and the first address identifier is located at an outer layer of the second packet; and sends the first encapsulated packet to the second network device. The technical solutions provided in this application can reduce encapsulation overheads.

## Description

This application claims priority to Chinese Patent Application No. 201910874831.4, filed with the National Intellectual Property Administration on September 17, 2019, and entitled "PACKET SENDING METHOD AND APPARATUS", which is incorporated herein by reference in its entirety.

### TECHNICAL FIELD

This application relates to the network communications field, and more specifically, to a packet sending method and an apparatus.

### BACKGROUND

An internet protocol (internet protocol, IP) multicast technology implements efficient point-to-multipoint data transmission in an IP network, thereby effectively saving a network bandwidth and reducing a network load. Therefore, a multicast service is widely used in many aspects, such as real-time data transmission, multimedia conferencing, data copy, an internet protocol television (internet protocol television, IPTV), games, and simulation.

When an internet protocol version 6 (internet protocol version 6, IPv6) multicast service, for example, a virtual private network-internet protocol version 6 multicast ((virtual private network, VPN)-IPv6 multicast), or a multicast virtual private network (multicast virtual private network, MVPN)-IPv6 of a private network user is carried, an ingress node receives an IPv6 multicast packet, and adds outer encapsulation in the IPv6 multicast packet. The outer encapsulation includes, for example, identifier information for identifying virtual routing and forwarding (virtual routing and forwarding, VRF) to which the packet belongs. There is a correspondence between the encapsulated identifier and a source address (source address, SA) and a destination address (destination address, DA) in inner encapsulation of the IPv6 multicast packet.

In the conventional technical solution, after being encapsulated, the IPv6 multicast packet further includes a source address SA field and a destination address DA field of the IPv6 multicast packet in the inner encapsulation of the IPv6 multicast packet. The SA field and the DA field occupy specific memory resources, resulting in encapsulation overheads.

Therefore, how to reduce the packet encapsulation overheads becomes an urgent technical problem that needs to be resolved at present.

### SUMMARY

This application provides a packet sending method and an apparatus. A first IPv6 header in a received first packet can be updated to a second IPv6 header, so that the first IPv6 header includes a source address SA field and a destination address DA field, and the second IPv6 header obtained after updating does not include the source address SA field and the destination address DA field, thereby reducing packet encapsulation overheads.

According to a first aspect, a packet sending method is provided. The method is applied to a multicast virtual private network MVPN, the MVPN includes a first network device and a second network device, the first network device is an ingress node device in the MVPN, and the second network device is an egress node device in the MVPN. The method includes: The first network device receives a first packet sent by a first customer edge CE device, where the first packet includes a first internet protocol version 6 IPv6 header and a first payload, and the first IPv6 header includes a first source address SA and a first destination address DA. The first network device determines, according to a first entry, a first address identifier corresponding to the first SA and the first DA, where the first entry includes a correspondence between the first SA and the first DA and the first address identifier, and the first address identifier is used to indicate the first SA and the first DA. The first network device updates the first IPv6 header in the first packet to a second IPv6 header to obtain a second packet, where the second IPv6 header does not include a first SA field and a first DA field, a value of the first SA field is the same as a value of the first SA, and a value of the first DA field is the same as a value of the first DA. The first network device encapsulates the second packet by using the first address identifier to obtain a first encapsulated packet, where the first encapsulated packet includes the first address identifier, and the first address identifier is located at an outer layer of the second packet. The first network device sends the first encapsulated packet to the second network device.

In the technical solution, the first network device can update the first IPv6 header in the received first packet to the second IPv6 header, so that the first IPv6 header includes the source address SA field and the destination address DA field, and the second IPv6 header obtained after updating does not include the source address SA field and the destination address DA field, thereby reducing packet encapsulation overheads.

In a possible implementation, the first entry further includes a first indication flag, and the first indication flag is used to indicate the first network device to update the first IPv6 header to the second IPv6 header. The first network device updates the first IPv6 header in the first packet to the second IPv6 header according to the first indication flag to obtain the second packet.

In another possible implementation, the first address identifier includes first multi-protocol label switching MPLS.

In another possible implementation, the first address identifier further includes a bit index explicit replication BIER header.

In another possible implementation, the first address identifier includes a third IPv6 header, a third IPv6 address is encapsulated in an SA field in the third IPv6 header, and the third IPv6 address corresponds to the first SA and the first DA.

In another possible implementation, the first address identifier includes a fourth IPv6 header, a fourth IPv6 address is encapsulated in a DA field in the fourth IPv6 header, and the fourth IPv6 address corresponds to the first SA and the first DA.

In another possible implementation, the first address identifier further includes an IPv6 extension header, and the IPv6 extension header includes a BIER header.

In another possible implementation, the method further includes: The first network device sends the first entry to the second network device.

In another possible implementation, before the first network device sends the first entry to the second network device, the method further includes: The first network device allocates the corresponding first address identifier to the first SA and the first DA.

In another possible implementation, the method further includes: The first network device receives the first entry sent by the second network device.

In another possible implementation, the first entry further includes a virtual routing and forwarding VRF identifier corresponding to the first SA and the first DA.

According to a second aspect, a packet sending method is provided. The method is applied to a multicast virtual private network MVPN, the MVPN includes a first network device and a second network device, the first network device is an ingress node device in the MVPN, and the second network device is an egress node device in the MVPN. The method includes: The second network device receives a first encapsulated packet sent by the first network device, where the first encapsulated packet includes a second packet and a first address identifier, the first address identifier is located at an outer layer of the second packet, the second packet includes a second IPv6 header and a first pay load, and the second IPv6 header does not include a first SA field and a first DA field. The second network device determines, according to a first entry, a first SA and a first DA that correspond to the first address identifier, where the first entry includes a correspondence between the first SA and the first DA and the first address identifier, the first address identifier is used to indicate the first SA and the first DA, a value of the first SA is the same as a value of the first SA field, and a value of the first DA is the same as a value of the first DA field. The second network device updates the second IPv6 header to a first IPv6 header to obtain a first packet, where the first IPv6 header includes the first SA field and the first DA field. The second network device sends the first payload in the first packet to a second customer edge CE device based on the first SA field and the first DA field in the first IPv6 header.

In a possible implementation, the first entry further includes a first indication flag corresponding to the first SA and the first DA, and the first indication flag is used to indicate the first network device to update the first IPv6 header to the second IPv6 header. The second network device updates the second IPv6 header to the first IPv6 header according to the first indication flag to obtain the first packet.

In another possible implementation, the first address identifier includes first multi-protocol label switching MPLS.

In another possible implementation, the first address identifier further includes a bit index explicit replication BIER header.

In another possible implementation, the first address identifier includes a third IPv6 header, a third IPv6 address is encapsulated in a source address SA field in the third IPv6 header, and the third IPv6 address corresponds to the first SA and the first DA.

In another possible implementation, the first address identifier includes a fourth IPv6 header, a fourth IPv6 address is encapsulated in a destination address DA field in the fourth IPv6 header, and the fourth IPv6 address corresponds to the first SA and the first DA.

In another possible implementation, the first address identifier further includes an IPv6 extension header, and the IPv6 extension header includes a BIER header.

In another possible implementation, the method further includes: The second network device receives the first entry sent by the first network device.

In another possible implementation, the method further includes: The second network device sends the first entry to the first network device.

In another possible implementation, before the second network device sends the first entry to the first network device, the method further includes: The second network device allocates the corresponding first address identifier to the first SA and the first DA.

In another possible implementation, the first entry further includes a virtual routing and forwarding VRF identifier corresponding to the first SA and the first DA.

According to a third aspect, a first network device is provided. The first network device is an ingress node device in a multicast virtual private network MVPN. The first network device includes:
a receiving module, configured to receive a first packet sent by a first customer edge CE device, where the first packet includes a first internet protocol version 6 IPv6 header and a first payload, and the first IPv6 header includes a first source address SA and a first destination address DA;
a determining module, configured to determine, according to a first entry, a first address identifier corresponding to the first SA and the first DA, where the first entry includes a correspondence between the first SA and the first DA and the first address identifier, and the first address identifier is used to indicate the first SA and the first DA;
an update module, configured to update the first IPv6 header in the first packet to a second IPv6 header to obtain a second packet, where the second IPv6 header does not include a first SA field and a first DA field, a value of the first SA field is the same as a value of the first SA, and a value of the first DA field is the same as a value of the first DA;
an encapsulation module, configured to encapsulate the second packet by using the first address identifier to obtain a first encapsulated packet, where the first encapsulated packet includes the first address identifier, and the first address identifier is located at an outer layer of the second packet; and
a sending module, configured to send the first encapsulated packet to a second network device, where the second network device is an egress node device in the MVPN.

In the technical solution, the first network device can update the first IPv6 header in the received first packet to the second IPv6 header, so that the first IPv6 header includes the source address SA field and the destination address DA field, and the second IPv6 header obtained after updating does not include the source address SA field and the destination address DA field, thereby reducing packet encapsulation overheads.

In a possible implementation, the first entry further includes a first indication flag, and the first indication flag is used to indicate the first network device to update the first IPv6 header to the second IPv6 header.

The update module is specifically configured to update the first IPv6 header in the first packet to the second IPv6 header according to the first indication flag to obtain the second packet.

In another possible implementation, the first address identifier includes first multi-protocol label switching MPLS.

In another possible implementation, the first address identifier further includes a bit index explicit replication BIER header.

In another possible implementation, the first address identifier includes a third IPv6 header, a third IPv6 address is encapsulated in an SA field in the third IPv6 header, and the third IPv6 address corresponds to the first SA and the first DA.

In another possible implementation, the first address identifier includes a fourth IPv6 header, a fourth IPv6 address is encapsulated in a DA field in the fourth IPv6 header, and the fourth IPv6 address corresponds to the first SA and the first DA.

In another possible implementation, the first address identifier further includes an IPv6 extension header, and the IPv6 extension header includes a BIER header.

In another possible implementation, the sending module is further configured to send the first entry to the second network device.

In another possible implementation, the first network device further includes:
an allocation module, configured to allocate the corresponding first address identifier to the first SA and the first DA.

In another possible implementation, the receiving module is further configured to receive the first entry sent by the second network device.

In another possible implementation, the first entry further includes a virtual routing and forwarding VRF identifier corresponding to the first SA and the first DA.

According to a fourth aspect, a second network device is provided. The second network device is an egress node device in a multicast virtual private network MVPN. The second network device includes:
a receiving module, configured to receive a first encapsulated packet sent by a first network device, where the first encapsulated packet includes a second packet and a first address identifier, the first address identifier is located at an outer layer of the second packet, the second packet includes a second IPv6 header and a first pay load, the second IPv6 header does not include a first SA field and a first DA field, and the first network device is an ingress node device in the MVPN;
a determining module, configured to determine, according to a first entry, a first SA and a first DA that correspond to the first address identifier, where the first entry includes a correspondence between the first SA and the first DA and the first address identifier, the first address identifier is used to indicate the first SA and the first DA, a value of the first SA is the same as a value of the first SA field, and a value of the first DA is the same as a value of the first DA field;
an update module, configured to update the second IPv6 header to a first IPv6 header to obtain a first packet, where the first IPv6 header includes the first SA field and the first DA field; and
a sending module, configured to send the first payload in the first packet to a second customer edge CE device based on the first SA and the first DA field in the first IPv6 header.

In a possible implementation, the first entry further includes a first indication flag corresponding to the first SA and the first DA, and the first indication flag is used to indicate the first network device to update the first IPv6 header to the second IPv6 header. The second network device updates the second IPv6 header to the first IPv6 header according to the first indication flag to obtain the first packet.

In another possible implementation, the first address identifier includes first multi-protocol label switching MPLS.

In another possible implementation, the first address identifier further includes a bit index explicit replication BIER header.

In another possible implementation, the first address identifier includes a third IPv6 header, a third IPv6 address is encapsulated in a source address SA field in the third IPv6 header, and the third IPv6 address corresponds to the first SA and the first DA.

In another possible implementation, the first address identifier includes a fourth IPv6 header, a fourth IPv6 address is encapsulated in a destination address DA field in the fourth IPv6 header, and the fourth IPv6 address corresponds to the first SA and the first DA.

In another possible implementation, the first address identifier further includes an IPv6 extension header, and the IPv6 extension header includes a BIER header.

In another possible implementation, the receiving module is further configured to receive the first entry sent by the first network device.

In another possible implementation, the sending module is further configured to send the first entry to the first network device.

In another possible implementation, the second network device further includes: an allocation module, configured to allocate the corresponding first address identifier to the first SA and the first DA.

In another possible implementation, the first entry further includes a virtual routing and forwarding VRF identifier corresponding to the first SA and the first DA.

According to a fifth aspect, a first network device is provided. The first network device includes a processor, a memory, an interface, and a bus. The interface may be implemented in a wireless or wired manner, and may be specifically a network adapter. The processor, the memory, and the interface are connected through the bus.

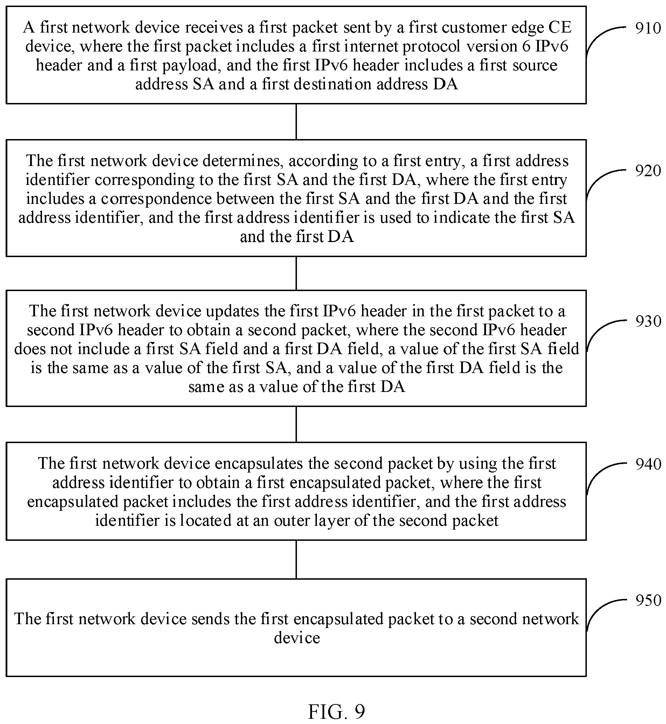

The interface may specifically include a transmitter and a receiver, and is used by the first network device to send information to and receive information from the second network device and the first CE device in the foregoing embodiment. For example, the interface is used to support receiving the first packet sent by the first customer edge CE device. For another example, the interface is used to send the first encapsulated packet to the second network device. For another example, the interface is used to send the first entry to the second network device. For example, the interface is used to support step 910 and step 950 in FIG. 9. The processor is configured to perform processing performed by the first network device in the foregoing embodiment. For example, the processor is configured to: determine, according to a first entry, a first address identifier corresponding to the first SA and the first DA; update the first IPv6 header in the first packet to a second IPv6 header to obtain a second packet; encapsulate the second packet by using the first address identifier to obtain a first encapsulated packet; and/or perform another process of the technology described in this specification. For example, the processor is configured to support step 920, step 930, and step 940 in FIG. 9. The memory includes an operating system and an application, and is configured to store programs, code, or instructions. When executing the programs, the code, or the instructions, the processor or a hardware device may complete the processing processes of the first network device in the method embodiments. Optionally, the memory may include a read-only memory (read-only memory, ROM) and a random access memory (random access memory, RAM). The ROM includes a basic input/output system (basic input/output system, BIOS) or an embedded system, and the RAM includes an application and an operating system. When the first network device needs to run, a bootloader in the BIOS or the embedded system that is built into the ROM is used to boot a system to start, and boot the first network device to enter a normal running state. After entering the normal running state, the first network device runs the application and the operating system in the RAM, to complete the processing processes of the first network device in the method embodiments.

It may be understood that the first network device may include any quantity of interfaces, processors, or memories in actual application.

According to a sixth aspect, a second network device is provided. The second network device includes a processor, a memory, an interface, and a bus. The interface may be implemented in a wireless or wired manner, and may be specifically a network adapter. The processor, the memory, and the interface are connected through the bus.

The interface may specifically include a transmitter and a receiver, and is used by the second network device to send information to and receive information from the first network device and the second CE device in the foregoing embodiment. For example, the interface is used to support receiving the first encapsulated packet sent by the first network device. For another example, the interface is used to send the first payload in the first packet to a second customer edge CE device based on the first SA and the first DA field in the first IPv6 header. The processor is configured to perform processing performed by the second network device in the foregoing embodiment. For example, the processor is configured to: determine, according to a first entry, a first SA and a first DA that correspond to the first address identifier; update the second IPv6 header to a first IPv6 header to obtain a first packet; and/or perform another process of the technology described in this specification. The memory includes an operating system and an application, and is configured to store programs, code, or instructions. When executing the programs, the code, or the instructions, the processor or a hardware device may complete the processing processes of the second network device in the method embodiments. Optionally, the memory may include a read-only memory (read-only memory, ROM) and a random access memory (random access memory, RAM). The ROM includes a basic input/output system (basic input/output system, BIOS) or an embedded system, and the RAM includes an application and an operating system. When the second network device needs to run, a bootloader in the BIOS or the embedded system that is built into the ROM is used to boot a system to start, and boot the second network device to enter a normal running state. After entering the normal running state, the second network device runs the application and the operating system in the RAM, to complete the processing processes of the second network device in the method embodiments.

It may be understood that the second network device may include any quantity of interfaces, processors, or memories in actual application.

According to a seventh aspect, a computer program product is provided. The computer program product includes computer program code. When the computer program code is run on a computer, the computer is enabled to perform the methods in the foregoing aspects.

According to an eighth aspect, a computer-readable medium is provided. The computer-readable medium stores program code. When the computer program code is run on a computer, the computer is enabled to perform the methods in the foregoing aspects.

According to a ninth aspect, a system is provided. The system includes the foregoing first network device and the foregoing second network device.

### BRIEF DESCRIPTION OF DRAWINGS

FIG. 1 is a schematic diagram of an application scenario to which this application is applied;
FIG. 2 is a schematic diagram of a possible format of an IPv6 packet;
FIG. 3 is a schematic diagram of a format of a packet obtained after MPLS encapsulation is performed on an IPv6 packet;
FIG. 4 is a schematic diagram of a format of a packet obtained after IPv6 encapsulation is performed on an IPv6 packet;
FIG. 5 is a schematic diagram of networking of a BIER technology;
FIG. 6 is a schematic diagram of a possible format of a BIER header;
FIG. 7 is a schematic diagram of a format of a packet obtained after BIER-MPLS encapsulation is performed on an IPv6 packet;
FIG. 8 is a schematic diagram of a format of a packet obtained after BIERv6 encapsulation is performed on an IPv6 packet;
FIG. 9 is a schematic flowchart of a packet sending method according to an embodiment of this application;
FIG. 10 a schematic flowchart of another packet sending method according to an embodiment of this application;
FIG. 11 is a schematic diagram of a format of a first encapsulated packet when a network device encapsulates an IPv6 packet by using BIER-MPLS according to an embodiment of this application;
FIG. 12 is a schematic flowchart of another packet sending method according to an embodiment of this application;
FIG. 13 is a schematic diagram of a format of a second encapsulated packet when a network device encapsulates an IPv6 packet by using MPLS according to an embodiment of this application;
FIG. 14 is a schematic flowchart of another packet sending method according to an embodiment of this application;
FIG. 15 is a schematic diagram of a format of a third encapsulated packet when a network device encapsulates an IPv6 packet by using BIERv6 according to an embodiment of this application;
FIG. 16 is a schematic flowchart of another packet sending method according to an embodiment of this application;
FIG. 17 is a schematic diagram of a format of a fourth encapsulated packet when a network device encapsulates an IPv6 packet by using an IPv6 according to an embodiment of this application;
FIG. 18 is a schematic diagram of a structure of a first network device 1800 according to an embodiment of this application;
FIG. 19 is a schematic diagram of a structure of a second network device 1900 according to an embodiment of this application;
FIG. 20 is a schematic diagram of a hardware structure of a first network device 2000 according to an embodiment of this application;
FIG. 21 is a schematic diagram of a hardware structure of another first network device 2100 according to an embodiment of this application;
FIG. 22 is a schematic diagram of a hardware structure of a second network device 2200 according to an embodiment of this application; and
FIG. 23 is a schematic diagram of a hardware structure of another second network device 2300 according to an embodiment of this application.

### DESCRIPTION OF EMBODIMENTS

The following describes the technical solutions of this application with reference to the accompanying drawings.

An internet protocol (internet protocol, IP) multicast technology implements efficient point-to-multipoint data transmission in an IP network, and multicast traffic can effectively save a network bandwidth and reduce a network load. Therefore, the internet protocol multicast technology is widely used in many aspects, such as real-time data transmission, multimedia conferencing, data copy, an internet protocol television (internet protocol television, IPTV), games, and simulation.

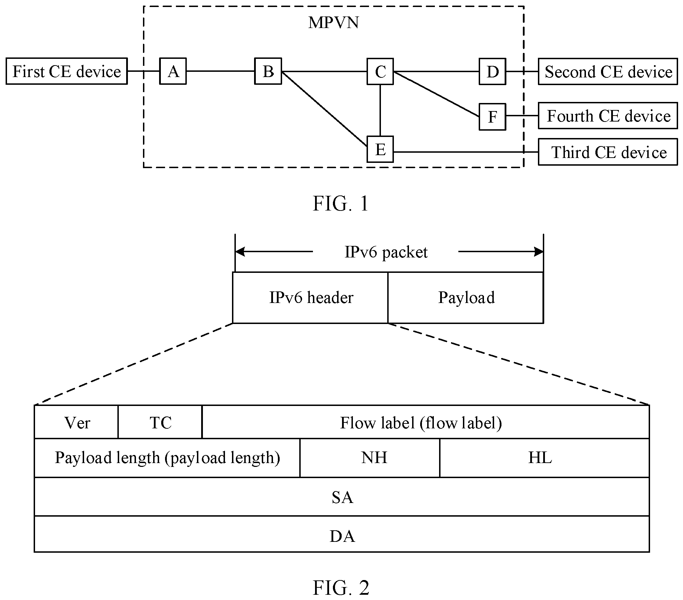

FIG. 1 is a schematic diagram of an application scenario to which this application is applied. As shown in FIG. 1, an MVPN network may be understood as carrying multicast traffic of a virtual private network (virtual private network, VPN) in a public network. The public network is not specifically limited in this embodiment of this application. For example, the public network may be a network of a service provider (service provider), such as a telecom operator network. For another example, the public network may alternatively be a data center (data center). The multicast traffic transmitted in the MVPN network is not specifically limited in this embodiment of this application, and may be traffic of an IPTV service, or may be traffic of a multimedia conferencing service.

Refer to FIG. 1. For example, the MVPN may include a network device A to a network device F, and the multicast traffic may be multicast traffic from the network device A to the network device D, the network device E, and the network device F. As an ingress node in the MVPN, the network device A may be referred to as a head node, and is connected to a user-side device, for example, connected to a first customer edge (customer edge, CE) device. The network device A is responsible for receiving a user multicast packet from the first CE device, encapsulating the user multicast packet, and sending the network device D the user multicast packet obtained after encapsulation, the network device E, and the network device F through the MVPN. The network device D, the network device E, and the network device F each are used as an egress node in the MVPN, and may be referred to as a tail node, and are responsible for receiving, through the MVPN, the user multicast packet obtained after encapsulation, removing outer encapsulation of the user multicast packet, and sending inner encapsulation of the user multicast packet to connected user-side devices. For example, the network device D is responsible for sending the inner encapsulation of the user multicast packet to a second CE device, the network device E is responsible for sending the inner encapsulation of the user multicast packet to a third CE device, and the network device F is responsible for sending the inner encapsulation of the user multicast packet to a fourth CE device.

It should be understood that a process in which the head node encapsulates the outer encapsulation in the received user multicast packet, forwards the packet through the MVPN, and the leaf nodes remove the outer encapsulation from the user multicast packet, and send the multicast traffic to the user side is also applied to the multicast traffic in the public network. That is, the foregoing packet sending process is also applied to the multicast traffic in the public network. For example, the user side corresponding to the head node and the user side corresponding to the tail node each may be considered as a special VPN.

It should be noted that a quantity of network devices in the MVPN is not limited in this embodiment of this application. Descriptions are provided by using the six network devices from the network device A to the network device F as an example in FIG. 1.

Encapsulation performed by the network device A on the user multicast packet may also be referred to as tunnel encapsulation. There are a plurality of implementations of the encapsulation. This is not specifically limited in this embodiment of this application. For example, the encapsulation may include but is not limited to multi-protocol label switching (multi-protocol label switching, MPLS) encapsulation, IPv6 encapsulation, and bit index explicit replication (bit index explicit replication, BIER).

For ease of description in this embodiment of this application, the following separately describes in detail formats of the several encapsulated packets.

A format of the IPv6 packet received by the network device A from the first CE device is first described. Refer to FIG. 2. An IPv6 packet includes an IPv6 header and a payload (payload). The IPv6 header may include the following fields:
Version (version, Ver): 4 bits long.

Traffic class (traffic class, TC): 8 bits long. This field indicates a class and priority of an IPv6 data packet.

Flow label (flow label): 20 bits long. A "flow" may be understood as a data packet from a specific source address to a specific destination address in a network. Data packets belonging to a same "flow" have a same flow label.

Payload length (payload length): 16 bits long. This field indicates a length of parts other than the IPv6 basic header, for example, a length of an IPv6 extension header and an inner user data packet.

Next header (next header, NH): 8 bits long. This field may be understood as an identifier of an IPv6 extension header (namely, a type of the IPv6 extension header) that immediately follows the IPv6 basic header, where each IPv6 extension header also includes an NH field.

Hop limit (hop limit, HL): 8 bits long. This field is similar to a time to live (time to live, TTL) field in an IPv4.

Source address (source address, SA): 128 bits long. This field is used to fill an address of user equipment that sends the IPv6 packet.

Destination address (destination address, DA): 128 bits long. This field is used to fill an address of user equipment that receives the IPv6 packet.

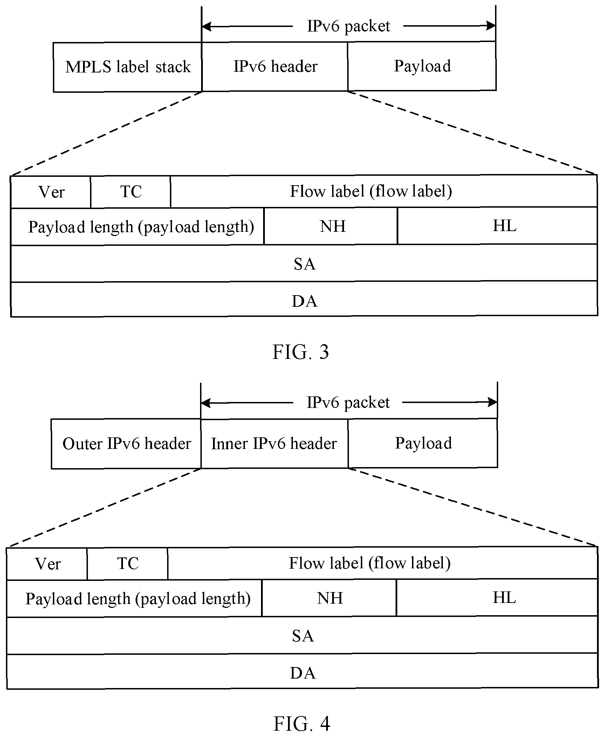

For example, the MPLS encapsulation is performed on the IPv6 packet. FIG. 3 shows a format of a packet obtained after a network device A performs MPLS encapsulation on an IPv6 packet. Refer to FIG. 3. The network device A encapsulates an outer MPLS label stack (label stack) in the IPv6 packet. It should be understood that the MPLS label stack is not specifically limited in this embodiment of this application. For example, the MPLS label stack may be a set of a plurality of MPLS labels, where an MPLS label close to an inner IPv6 header and an inner payload (payload) may be referred to as a stack-bottom MPLS label or an inner MPLS label. An MPLS label near an outer layer may be referred to as a top-of-stack MPLS label or an outer MPLS label. For another example, the MPLS label stack may alternatively be a single MPLS label.

For example, the IPv6 encapsulation is performed on the IPv6 packet. FIG. 4 shows a format of a packet obtained after a network device A performs IPv6 encapsulation on an IPv6 packet. Refer to FIG. 4. The network device A further encapsulates an outer IPv6 header in inner encapsulation of the IPv6 packet. In this case, the encapsulated IPv6 header may be referred to as an outer IPv6 header, and an IPv6 header in the IPv6 packet may be referred to as an inner IPv6 header. A field in the outer IPv6 header is the same as a field in the inner IPv6 header. For details, refer to the foregoing description of the field in the IPv6 header in the IPv6 packet. Details are not described herein again. It should be noted that an SA field in the outer IPv6 header is filled with an IPv6 address of the network device A, and a DA field is filled with an IPv6 address of a next hop that receives a packet in an MVPN.

For example, the BIER encapsulation is performed on the IPv6 packet. The network device A encapsulates an outer BIER header in the IPv6 packet. For ease of description, the following first describes related concepts in the BIER encapsulation.

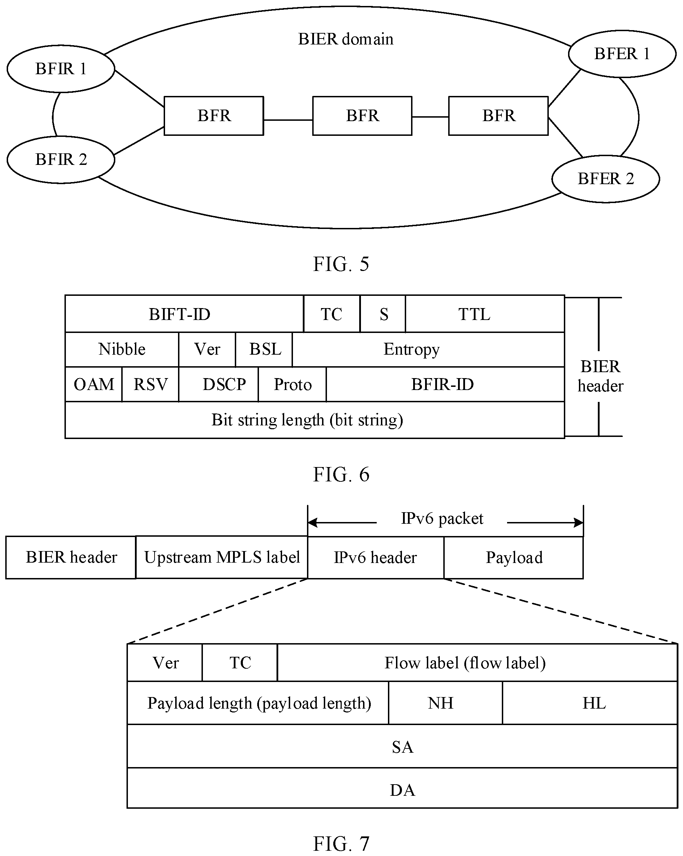

A BIER technology is a new technology for constructing a multicast data forwarding path. The technology introduces a new multicast technology architecture that does not need to construct a multicast distribution tree. As shown in FIG. 5, a router that supports a BIER technology may be referred to as a BIER forwarding router (BIER forwarding router, BFR), and the BFR device may receive and forward a BIER packet. A multicast forwarding domain including one or more BFRs is referred to as a BIER domain (BIER domain). At an edge of the BIER domain, a device that performs BIER encapsulation on a user multicast data packet is referred to as a BIER forwarding ingress router (BIER forwarding ingress router, BFIR), and a device that decapsulates a BIER data packet is referred to as a BIER forwarding egress router (BIER forwarding egress router, BFER).

In the BIER domain, each edge node (for example, a BFER) is configured with a bit position (bit position) that is globally unique in an entire BIER sub domain (sub domain, SD). For example, a value may be configured as a BFR identifier (BFR identifier, BFR ID) for each edge node, for example, a value ranging from 1 to 256. All BFR IDs in the BIER domain form a bit string (bit string). When a user-side IPv6 packet is transmitted in the BIER domain, a specific BIER header needs to be encapsulated. The BIER header identifies all destination nodes of the user data traffic in a form of a bit string. An intermediate forwarding node in the BIER domain performs routing based on a forwarding information table and the bit string carried in the BIER header, to ensure that the user data traffic can be sent to all destination addresses.

FIG. 6 is a schematic block diagram of a possible format of a BIER header. As shown in FIG. 6, fields in the BIER header may include but are not limited to the following: bit index forwarding table identifier (bit index forwarding table identifier, BIFT ID) with 20 bits long, bit string length (bit string length, BSL), and other fields of 64 bits (8 bytes), for example, traffic class (traffic class, TC), stack (stack, S), time to live (time to live, TTL), version (version, Ver), and proto.

For ease of understanding, the following separately describes the fields in the BIER header in detail.

### (1) BIFT ID

BIFT ID is 20 bits long and is a label (label, L) in BIER-MPLS encapsulation. BIFT ID may include a combination of a sub-domain (sub-domain, SD)/bit string length (bit string length, BSL)/set identifier (set identifier, SI). Different BIFT ID may correspond to different combinations of SDs/BSLs/SIs.

### 1. Sub-domain (SD)

A BIER domain may be configured with different sub-domains SDs according to a requirement of an actual service scenario. Each sub-domain SD is represented by a sub-domain identifier (sub-domain identifier, SD-ID), which is an 8-bit value in the range [0-255]. For example, different SDs may be configured in the BIER domain based on different services, for example, different virtual private networks (virtual private network, VPN). For example, a VPN 1 uses an SD 0, and a VPN 1 uses an SD 1.

It should be noted that a plurality of VPNs may alternatively use a same SD. Different SDs in the BIER domain may be in one interior gateway protocol (interior gateway protocol, IGP) process or topology, or may not be in one IGP process or topology. This is not specifically limited in this embodiment of this application.

### 2. Bit string length (BSL)

The BSL is a length of a bit string included in the BIER header. There may be a plurality of BSLs. This is not specifically limited in this embodiment of this application. The BSL may have 64 bits (minimum), 128 bits, 256 bits, 512 bits, 1024 bits, 2048 bits, or 4096 bits (maximum). Specifically, four bits are used for identification in the packet. For example, when the BSL has 64 bits, 0001 is used for identification in the packet; when the BSL has 128 bits, 0010 is used for identification in the packet; when the BSL has 512 bits, 0100 is used for identification in the packet; when the BSL has 1024 bits, 0101 is used for identification in the packet; and so on.

### 3. Set identifier (SI)

The SI may be understood as a set including a plurality of nodes or configured BFR IDs in a network. For example, when a BSL has 256 bits, but there are more than 256 nodes or more than 256 BFR IDs configured in the network, the nodes or the BFR IDs need to be divided into different sets. For example, nodes whose BFR IDs are 1 to 256 are in a set 0 (set index 0, or SI=0), and nodes whose BFR IDs are 257 to 512 are in a set 1 (set index 1, or SI=1).

After receiving a BIER packet, a BFR in a BIER domain may determine, based on a BIFT ID in a BIER header, an SD to which the BIER packet belongs, a used BSL, and a set including nodes that forward the packet or configured BFR IDs.

### (2) Bit string (bit string)

Each bit in the bit string is used to identify a BFER of an edge node. For example, a lower (the rightmost) bit of the bit string is used to identify that a next-hop node is a node corresponding to BFR-ID=1. The second bit from right to left in the bit string is used to identify that a next-hop node is a node corresponding to BFR-ID=2. A forwarding entry based on which a forwarding plane performs forwarding determines, based on a bit string in a packet, several specific next hops to which the packet is to be sent. If a plurality of bits correspond to a same next hop, the forwarding plane sends one packet only to the next hop. When receiving a packet header including BIER, the BFR in the BIER domain forwards the BIER packet based on a bit string and a BIFT ID that are carried in the BIER header.

For example, when BIFT ID=2, after receiving the BIER packet, the BFR may obtain, based on the BIFT ID in the BIER header, that the BIER packet belongs to the SD 0, the BSL used in the BIER header has 256 bits, and the BIER packet belongs to the set 1 (a set including the nodes whose BFR IDs=257 to 512).

In this embodiment of this application, bit position (bit position) configured for a node is flooded in the BIER domain in advance by using an interior gateway protocol (interior gateway protocol, IGP) or a border gateway protocol (border gateway protocol, BGP). Then a bit index forwarding table (bit index forwarding table, BIFT) is formed to indicate the user data traffic to be forwarded to each node in the BIER domain. The information flooded in the BIER domain by using the IGP or the BGP may be referred to as BIER information. When receiving the BIER packet in which the BIER header is encapsulated, the BFR forwards the BIER packet to the destination node according to the BIFT. In this embodiment of this application, the interior gateway protocol IGP may include but is not limited to an open shortest path first (open shortest path first, OSPF) protocol, an intermediate system to intermediate system (intermediate system to intermediate system, ISIS) protocol, and the like.

### (3) proto field

If the proto field is 4, it indicates that an original user data traffic packet following the BIER header is an IPv4 packet. If the proto field is 6, it indicates that the original user data packet following the BIER header is an IPv6 packet.

In this embodiment of this application, there may be a plurality of types of BIER encapsulation. For example, the BIER packet is encapsulated by using multi-protocol label switching (multi-protocol label switching, MPLS). Such type of encapsulation may be referred to as BIER-MPLS encapsulation. For another example, the BIER packet may be encapsulated by using an internet protocol version 6 (internet protocol version 6, IPv6). Such type of encapsulation may be referred to as BIERv6 encapsulation.

The BIER-MPLS encapsulation is used as an example. FIG. 7 shows a format of a packet obtained after a network device A performs BIER-MPLS encapsulation on an IPv6 packet. Refer to FIG. 7. The network device A encapsulates an outer BIER header and an outer upstream MPLS label in the IPv6 packet. For details about a field in the BIER header, refer to the description in FIG. 6. Details are not described herein again. It should be noted that, a proto field in the BIER header is equal to 2, it indicates that the outer encapsulated BIER header is followed by one upstream MPLS label.

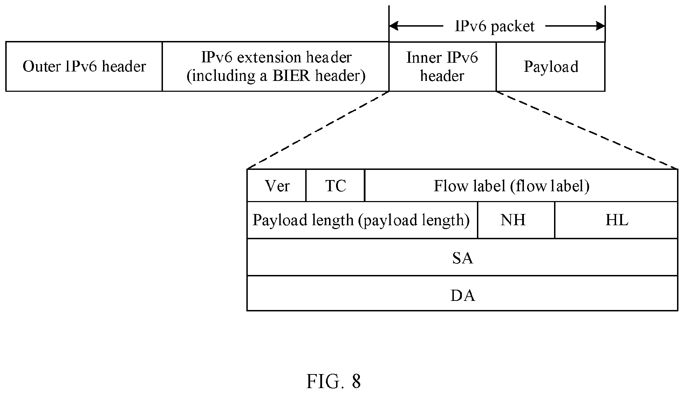

The BIERv6 encapsulation is used as an example. FIG. 8 shows a format of a packet obtained after a network device A performs BIERv6 encapsulation on an IPv6 packet. Refer to FIG. 8. The network device A further encapsulates an outer IPv6 header and an outer IPv6 extension header in inner encapsulation of the IPv6 packet. The IPv6 extension header includes a BIER header. For details about a field in the BIER header, refer to the description in FIG. 6. Details are not described herein again.

According to a packet sending method provided in the embodiments of this application, an IPv6 header in a received IPv6 packet can be updated to a new IPv6 header, and the new IPv6 header does not include a source address SA field and a destination address DA field, thereby reducing packet encapsulation overheads. With reference to FIG. 9, the following describes in detail the packet sending method provided in the embodiments of this application.

FIG. 9 is a schematic flowchart of a packet sending method according to an embodiment of this application. Refer to FIG. 9. The method may include steps 910 to 950. The following separately describes steps 910 to 950 in detail.

Step 910: A first network device receives a first packet sent by a first customer edge CE device, where the first packet includes a first internet protocol version 6 IPv6 header and a first payload, and the first IPv6 header includes a first source address SA and a first destination address DA.

It should be understood that, the first packet in this embodiment of this application may be an IPv6 packet. The first network device may correspond to the foregoing network device A. Specifically, for a format of the IPv6 packet that is sent by the first customer edge CE device and that is received by the first network device, refer to the description in FIG. 2. Details are not described herein again.

Step 920: The first network device determines, according to a first entry, a first address identifier corresponding to the first SA and the first DA, where the first entry includes a correspondence between the first SA and the first DA and the first address identifier, and the first address identifier is used to indicate the first SA and the first DA.

The correspondence that is in the first entry and between the first SA and the first DA and the first address identifier may be statically configured. Alternatively, the first network device may allocate the corresponding first address identifier to the first SA and the first DA, and the first network device sends the first entry to a second network device located at an ingress in an MPVN; or a second network device allocates the corresponding first address identifier to the first SA and the first DA, and sends the first entry to the first network device. For details, refer to descriptions in the following embodiments. Details are not described herein.

That the first network device determines, according to the first entry, the first address identifier corresponding to the first SA and the first DA may be understood as that the first network device uses the first SA and the first DA as index (key) values, and searches for the first address identifier corresponding to the first SA and the first DA in the first entry.

Step 930: The first network device updates the first IPv6 header in the first packet to a second IPv6 header to obtain a second packet, where the second IPv6 header does not include a first SA field and a first DA field, a value of the first SA field is the same as a value of the first SA, and a value of the first DA field is the same as a value of the first DA.

That the first network device updates the first IPv6 header in the first packet to the second IPv6 header may be understood as that the first network device deletes a first SA field and a first DA field in the first IPv6 header, that is, the second IPv6 header does not include the first SA field and the first DA field.

It should be noted that, in this embodiment of this application, the value of the first SA field is the same as the value of the first SA, the value of the first DA field is the same as the value of the first DA. That the second IPv6 header does not include the first SA field and the first DA field may also be understood that the second IPv6 header does not include the value of the first SA and the value of the first DA.

For example, for the first IPv6 header before updating, refer to the description in FIG. 2. Specifically, the first IPv6 header may include the following fields: Ver, TC, flow label (flow label), payload length (payload length), NH, HL, SA, and DA. The second IPv6 header obtained after updating does not include the SA field and the DA field. That is, the second IPv6 header may include the following fields: Ver, TC, flow label (flow label), payload length (payload length), NH, and HL. In other words, the first network device deletes the SA field and the DA field from the first IPv6 header to obtain the second IPv6 header.

Optionally, in some embodiments, the first entry further includes a first indication flag corresponding to the first SA and the first DA, and the first indication flag is used to indicate the first network device to update the first IPv6 header to the second IPv6 header. The first network device may find the corresponding first indication flag by using the first SA and the first DA in the first IPv6 header, and update the first IPv6 header to the second IPv6 header according to the first indication flag.

Step 940: The first network device encapsulates the second packet by using the first address identifier to obtain a first encapsulated packet, where the first encapsulated packet includes the first address identifier, and the first address identifier is located at an outer layer of the second packet.

The first address identifier is not specifically limited in this embodiment of this application. For example, the first address identifier includes a first multi-protocol label switching MPLS label. That is, the MPLS label corresponds to the first SA and the first DA. Optionally, the first address identifier further includes a BIER header. That is, the MPLS label and the BIER header correspond to the first SA and the first DA. For another example, the first address identifier includes a third IPv6 header corresponding to the first SA and the first DA, a third IPv6 address is encapsulated in a source address SA field in the third IPv6 header. That is, the third IPv6 address corresponds to the first SA and the first DA. Optionally, the first address identifier further includes a BIER header. For another example, the first address identifier includes a fourth IPv6 header corresponding to the first SA and the first DA, and a fourth IPv6 address is encapsulated in a destination address DA field in the fourth IPv6 header. That is, the fourth IPv6 address corresponds to the first SA and the first DA. Optionally, the first address identifier further includes a BIER header.

Step 950: The first network device sends the first encapsulated packet to the second network device.

In the technical solution, the first network device can update the first IPv6 header in the received first packet to the second IPv6 header, so that the first IPv6 header includes the source address SA field and the destination address DA field, and the second IPv6 header obtained after updating does not include the source address SA field and the destination address DA field, thereby reducing packet encapsulation overheads.

The following describes in detail a specific implementation process of the method provided in the embodiments of this application with reference to different encapsulation types.

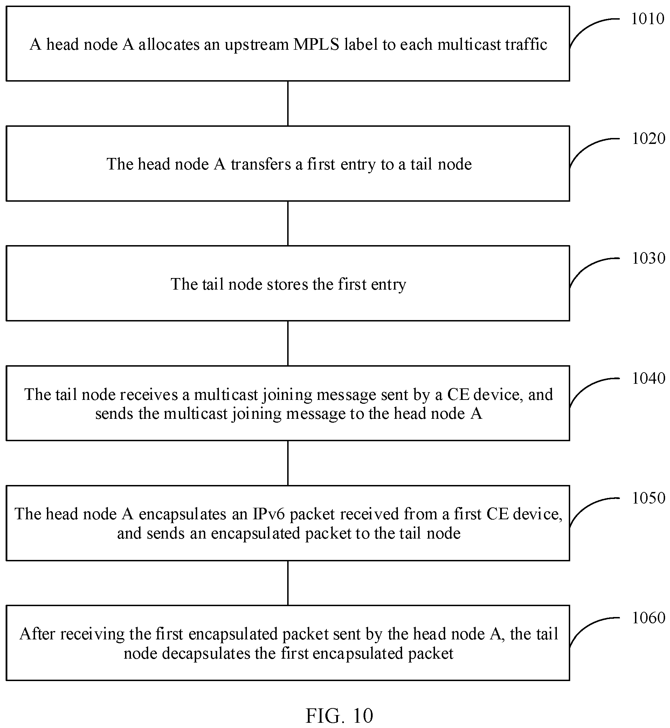

For example, BIER-MPLS encapsulation is performed on an IPv6 packet. Specific implementations of packet encapsulation and forwarding are described in detail with reference to FIG. 10. It should be understood that the following examples are merely intended to help a person skilled in the art understand the embodiments of this application, instead of limiting the embodiments of this application to a specific numerical value or a specific scenario shown in the examples. It is clearly that a person skilled in the art can make various equivalent modifications or changes based on the examples, and such modifications and changes also fall within the scope of the embodiments of this application.

A method shown in FIG. 10 may include steps 1010 to 1060. The following separately describes steps 1010 to 1060 in detail.

Step 1010: A head node A allocates an upstream MPLS label to each multicast traffic.

The head node A may dynamically allocate a corresponding upstream MPLS label to each multicast traffic. There are a plurality of specific implementations. For example, in this application, the head node A may dynamically allocate a same upstream MPLS label to all multicast traffic (S, G) in same virtual routing and forwarding (virtual routing and forwarding, VRF). For example, the head node A allocates upstream MPLS label=1002 to VRF 1. For another example, the head node A may further allocate different upstream MPLS labels to different multicast traffic (S, G) in same VRF. For example, the head node A allocates upstream MPLS label=1001 to multicast traffic (SI, G1) in VRF 1, and allocates upstream MPLS label=1003 to multicast traffic (S2, G2) in the VRF 1.

It should be noted that S1 in the multicast traffic (SI, G1) is used to indicate a source address (source address, SA) in an IPv6 header in inner encapsulation of the IPv6 packet sent by the head node A to a tail node D/E/F, and G1 is used to indicate a destination address (destination address, DA) in the IPv6 header in the inner encapsulation of the IPv6 packet sent by the head node A to the tail node D/E/F. For example, SA=S1v6 and DA=G1v6.

In this embodiment of this application, after allocating a corresponding upstream MPLS label to each multicast traffic, the head node A may locally store a first entry. The first entry includes a correspondence between multicast traffic and allocated upstream MPLS label. Optionally, the first entry may further include an indication flag, and the indication flag is used to indicate the head node A to delete an SA field and a DA field from inner encapsulation of the IPv6 packet. Optionally, the first entry may further include context of the upstream MPLS label, for example, an identifier of the head node A (an IP address and/or a BFIR-ID of A) that allocates upstream MPLS label to multicast traffic. Optionally, the first entry may further include an identifier of VRF to which multicast traffic belongs, for example, the identifier is VRF 1.

It should be understood that the identifier of the VRF to which the multicast traffic belongs may be a name of the VRF, or may be an integer of an ID number of the VRF. By way of example and not limitation, in a packet sending process, the identifier of the VRF may be an identifier that meets a protocol requirement. For example, the identifier of the VRF is an identifier of a routing table (route-target).

For example, the head node A allocates upstream MPLS label=1001 to multicast traffic (S1v6, G1v6) in the VRF 1. A possible first entry stored by the head node A is as follows:
(BFIR-ID=BFR-ID of the head node A=4, upstream MPLS label=1001, identifier of VRF 1, S1v6, G1v6, V6POPSD)

It should be understood that, V6POPSD corresponds to the foregoing indication flag, and is used to indicate the node A to delete the SA field and the DA field from the IPv6 header in inner encapsulation of the IPv6 packet.

For ease of description, the following uses an example in which the head node A allocates upstream MPLS label=1001 to multicast traffic (S1v6, G1v6) in VRF 1 for description.

Configuration in which the head node A allocates a corresponding upstream MPLS label to each multicast traffic and deletes the SA field and the DA field from the IPv6 header in the inner encapsulation of the IPv6 packet is as follows:

```
          ip vpn-instance vrf1
          ipv6-address
          MVPN
             sender-enable
             spmsi-tunnel
               inner-ipv6-sa-da-pop enable mpls
```

Step 1020: The head node A transfers the first entry to the tail node.

The head node A may send the first entry to the tail node D/E/F by using a border gateway protocol (border gateway protocol, BGP) protocol, which may also be referred to as a BGP-MVPN below.

Specifically, by way of example and not limitation, the head node A may send the first entry to the tail node D/E/F by using a selective-provider multicast service interface auto-discovery (selective-provider multicast service interface auto-discovery, S-PMSIA-D) routing message in the BGP-MVPN.

Optionally, the node A/D/E/F may establish a BGP neighbor relationship with each other before step 1020.

Step 1030: The tail node stores the first entry.

For example, a tail node is the node E, and an identifier of VRF 1 is an identifier of a route-target for the VRF 1. An identifier of a route-target for the VRF 1 is configured on the tail node E. After receiving the first entry sent by the head node A by using the S-PMSIA-D routing message, the tail node E determines, based on the fact that the identifier of the VRF 1 in the first entry is the identifier of the route-target for the VRF 1, that the identifier of the route-target for VRF 1 matches the locally configured identifier of the route-target. Therefore, it may be determined that the S-PMSIA-D routing message corresponds to the VRF 1 in the current node. Correspondingly, the tail node E may store the first entry included in the S-PMSIA-D routing message.

A possible first entry stored by the tail node E is as follows:
(BFIR-ID=BFR-ID of the head node A=4, upstream MPLS label=1001, identifier of VRF 1, S1v6, G1v6, V6POPSD)

It should be noted that, in the BIER-MPLS encapsulation, when determining the foregoing correspondence, the tail node E needs to use the upstream MPLS label and the identifier of the node (referred to as the context (context) of the upstream label) together to correspond to the VRF 1. For example, the node A and the node F each may send the node E an S-PMSIA-D route including upstream MPLS label label=Lx that is allocated by each of the two nodes but has a same value. However, the two labels allocated by each of the two nodes represent VRF 1 and VRF 2 on the node E respectively. After receiving the packet with the upstream MPLS label Lx, the node E needs to determine whether the packet is from the node A or the node F, and then determine, based on the identifier of the node (an identifier of the node A or an identifier of the node F) and the label value (Lx) of the upstream MPLS label, the VRF to which the packet belongs.

Step 1040: The tail node receives a multicast joining message sent by a CE device, and sends the multicast joining message to the head node A.

The tail node D/E/F may send the multicast joining message to the head node A by using a BGP-MVPN message. The BGP-MVPN message may be, for example, a multicast route (multicast route) or a leaf auto-discovery route (leaf auto-discovery route, leaf A-D route).

Step 1050: The head node A encapsulates the IPv6 packet received from a first CE device, and sends an encapsulated IPv6 packet to the tail node.

After receiving the multicast joining message from the tail node D/E/F, the head node A encapsulates the IPv6 packet received from the first CE side.

Specifically, the head node A may determine, based on SA=S1v6, DA=G1v6 in the IPv6 header in the IPv6 packet, and the locally stored first entry (BFIR-ID=BFR-ID of the head node A=4, upstream MPLS label=1001, identifier of VRF 1, S1v6, G1v6, V6POPSD), address identifier BFIR-ID=4 corresponding to SA=S1v6, DA=G1v6, and upstream MPLS label=1001. In the BIER-MPLS encapsulation, the outer encapsulated address identifier of the IPv6 packet may include the BIER header and the upstream MPLS label. The context of the upstream MPLS label is encapsulated in the BIER header, for example, the BFR-ID of the node is encapsulated in the BIFT-ID field in the BIER header. Therefore, it may be determined that an encapsulation type corresponding to SA=S1v6 and DA=G1v6 is the BIER-MPLS encapsulation.

The head node A may delete, according to the indication flag V6POPSD corresponding to SA=S1v6 and DA=G1v6 in the IPv6 header in the first entry, and the configuration in step 1010, a field SA=S1v6 and a field DA=G1v6 from the IPv6 header in the IPv6 packet, to obtain a second packet.

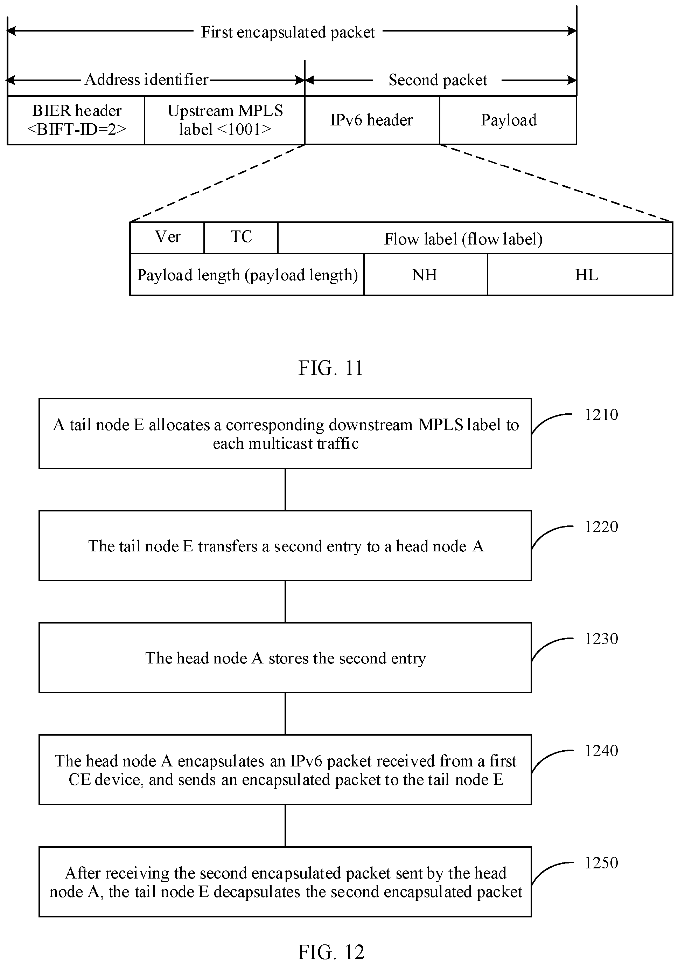

The head node A may further encapsulate the outer BIER header and the outer upstream MPLS label=1001 in the second packet based on the address identifier corresponding to SA=S1v6 and DA=G1v6 to obtain a first encapsulated packet, where the BIFT-ID=4 in the BIER header. The first encapsulated packet includes the outer encapsulated address identifier and the inner second packet. For a format of a first encapsulated packet, refer to FIG. 11.

In this embodiment of this application, the head node A may send the first encapsulated packet shown in FIG. 11 to the tail node.

Step 1060: After receiving the first encapsulated packet sent by the head node A, the tail node decapsulates the first encapsulated packet.

After receiving the first encapsulated packet shown in FIG. 11 sent by the head node A, the tail node D/E/F determines, based on the fact that the outer encapsulated address identifier is upstream MPLS label=1001 and BIFT-ID=4 in the BIER header, and a possible first entry (BFIR-ID=BFR-ID of the head node A=4, upstream MPLS label=1001, identifier of VRF 1, S1v6, G1v6, V6POPSD) stored by the tail node E in step 1030, SA=S1v6, DA=G1v6 in the IPv6 header corresponding to the upstream MPLS label=1001 and BIFT-ID=4 in the BIER header. The tail node D/E/F may fill SA=S1v6 and DA=G1v6 in the second packet shown in FIG. 11, so that the second packet includes the field A=S1v6 and the field DA=G1v6.

The tail node D/E/F removes the outer address identifier of the first encapsulated packet, and sends, based on the field SA=S1v6 and the field DA=G1v6 in the second packet, the second packet including the field SA=S1v6 and the field DA=G1v6 to a user side connected to the tail node.

The packet obtained after the BIER-MPLS encapsulation in this embodiment of this application is shown in FIG. 11. Compared with the encapsulated packet shown in FIG. 7, the second packet does not include the field SA=S1v6 and the field DA=G1v6 in an IPv6 header because the SA field and the DA field in the IPv6 header are deleted. This reduces storage space occupied by the SA field and the DA, thereby reducing packet encapsulation overheads.

For example, MPLS encapsulation is performed on an IPv6 packet. Specific implementations of packet encapsulation and forwarding are described in detail with reference to FIG. 12. It should be understood that the following examples are merely intended to help a person skilled in the art understand the embodiments of this application, instead of limiting the embodiments of this application to a specific numerical value or a specific scenario shown in the examples. It is clearly that a person skilled in the art can make various equivalent modifications or changes based on the examples, and such modifications and changes also fall within the scope of the embodiments of this application.

A method shown in FIG. 12 may include steps 1210 to 1250. The following separately describes steps 1210 to 1250 in detail.

For ease of description, the following uses an example in which a tail node is a node E for description.

Step 1210: The tail node E allocates a corresponding downstream MPLS label to each multicast traffic.

The tail node E may dynamically allocate a corresponding downstream MPLS label to each multicast traffic. There are a plurality of specific implementations. For example, in this application, the tail node E may dynamically allocate a same downstream MPLS label to all multicast traffic (S, G) in same VRF. For example, the tail node E allocates downstream MPLS label=1002 to VRF 1. For another example, the tail node E may further allocate different downstream MPLS labels to different multicast traffic (S, G) in same VRF. For example, the tail node E allocates downstream MPLS label=1004 to multicast traffic (SI, G1) in VRF 1, and allocates downstream MPLS label=1005 to multicast traffic (S2, G2) in the VRF 1.

In this embodiment of this application, after allocating a corresponding downstream MPLS label to each multicast traffic, the tail node E may locally store a second entry. The second entry includes a correspondence between multicast traffic and allocated downstream MPLS label. Optionally, the second entry may further include an indication flag, and the indication flag is used to indicate a head node A to delete an SA field and a DA field from an IPv6 header in inner encapsulation of the IPv6 packet. Optionally, the second entry may further include an identifier of VRF to which multicast traffic belongs, for example, the identifier is VRF 1.

For example, the tail node E dynamically allocates downstream MPLS label=1004 to multicast traffic (S1v6, G1v6) in the VRF 1. A possible second entry stored by the tail node E is as follows:
(Downstream MPLS label=1004, VRF 1, S1v6, G1v6, V6POPSD)

It should be understood that V6POPSD corresponds to the foregoing indication flag. For specific details about the indication flag, refer to the description in FIG. 10. Details are not described herein again.

For ease of description, the following uses an example in which the tail node E allocates downstream MPLS label=1004 to multicast traffic (S1v6, G1v6) in VRF 1 for description.

In this embodiment of this application, specific configuration in which the tail node E dynamically allocates the corresponding downstream MPLS label to the multicast traffic in the VRF can be as follows:

```
          ip vpn-instance vrf1
          ipv6-address
          MVPN
             sender-enable
             spmsi-tunnel
               enable mpls
```

Step 1220: The tail node E transfers the second entry to the head node A.

The tail node E may send the second entry in step 1210 to the head node A by using a BGP protocol (which may also be referred to as a BGP-MVPN below). Specifically, by way of example and not limitation, the tail node E may send the second entry to the head node A by using a leaf A-D routing message in the BGP-MVPN.

Optionally, the node A/D/E/F may establish a BGP neighbor relationship with each other before step 1220.

Step 1230: The head node A stores the second entry.

For example, an identifier of VRF 1 is an identifier of a route-target for the VRF 1. An identifier of a route-target for the VRF 1 is configured on the head node A. After receiving the second entry that is sent by the tail node E by using the leaf A-D routing message, the head node A determines, based on the fact that the identifier of the VRF 1 in the second entry is the identifier of the route-target for the VRF 1, that the identifier of the route-target for the VRF 1 matches the locally configured identifier of the route-target. Therefore, it may be determined that the leaf A-D routing message corresponds to the VRF 1 in the current node. Correspondingly, the head node A may store the second entry included in the leaf A-D routing message.

A possible second entry stored by the head node A is as follows:
(Downstream MPLS label=1004, VRF 1, S1v6, G1v6, V6POPSD)

Step 1240: The head node A encapsulates the IPv6 packet received from a first CE device, and sends an encapsulated IPv6 packet to the tail node E.

After receiving the multicast joining message from the tail node D/E/F, the head node A encapsulates the IPv6 packet received from the first CE side.

Specifically, the head node A may determine, based on SA=S1v6, DA=G1v6 in an IPv6 header in the IPv6 packet, and the locally stored second entry (Downstream MPLS label=1004, VRF 1, S1v6, G1v6, V6POPSD), that an address identifier corresponding to SA=S1v6 and DA=G1v6 is downstream MPLS label=1004. An outer encapsulated address identifier of the IPv6 packet may be an MPLS label in MPLS encapsulation. Therefore, it may be determined that an encapsulation type corresponding to SA=S1v6 and DA=G1v6 is the MPLS encapsulation.

The head node A may delete, according to the indication flag V6POPSD corresponding to SA=S1v6 and DA=G1v6 in the IPv6 header in the second entry and the local configuration, a field SA=S1v6 and a field DA=G1v6 from the IPv6 header in the IPv6 packet, to obtain a second packet.

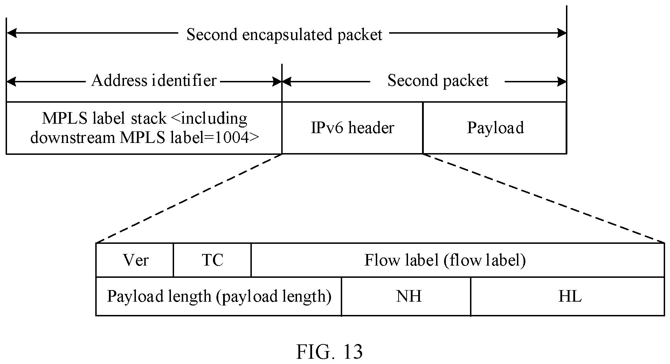

The head node A may further encapsulate downstream MPLS label=1004 in an outer MPLS label stack of the second packet based on the address identifier corresponding to SA=S1v6 and DA=G1v6,to obtain a second encapsulated packet. The second encapsulated packet includes the outer encapsulated address identifier and the inner second packet. For a format of the second encapsulated packet, refer to FIG. 13.

Configuration in which the head node A deletes the SA field and the DA field from the IPv6 header in the inner encapsulation of the IPv6 packet is as follows:

```
          ip vpn-instance vrf1
          ipv6-address
          MVPN
             sender-enable
             spmsi-tunnel
               inner-ipv6-sa-da-pop
```

In this embodiment of this application, the head node A may send the second encapsulated packet shown in FIG. 13 to the tail node E.

Step 1250: After receiving the second encapsulated packet sent by the head node A, the tail node E decapsulates the second encapsulated packet.

After receiving the second encapsulated packet shown in FIG. 13 sent by the head node A, the tail node E determines SA=S1v6 and DA=G1v6in the IPv6 header corresponding to downstream MPLS label=1004 based on the fact that the outer encapsulated MPLS label stack includes downstream MPLS label=1004 and the possible second entry (Downstream MPLS label=1004, VRF 1, S1v6, G1v6, V6POPSD) stored by the tail node E in step 1210. The tail node E may fill SA=S1v6 and DA=G1v6 in the second packet shown in FIG. 13, so that the second packet includes the field SA=S1v6 and the field DA=G1v6.

The tail node E removes the outer address identifier of the second encapsulated packet, and sends, based on the field SA=S1v6 and the field DA=G1v6 in the second packet, the second packet including the field SA=S1v6 and the field DA=G1v6 to a user side connected to the tail node.

The packet obtained after the MPLS encapsulation in this embodiment of this application is shown in FIG. 13. Compared with the packet obtained after the MPLS encapsulation shown in FIG. 3, the second packet does not include the field SA=S1v6 and the field DA=G1v6 in the IPv6 header because the SA field and the DA field in the IPv6 header are deleted. This reduces storage space occupied by the SA field and the DA field, thereby reducing packet encapsulation overheads.

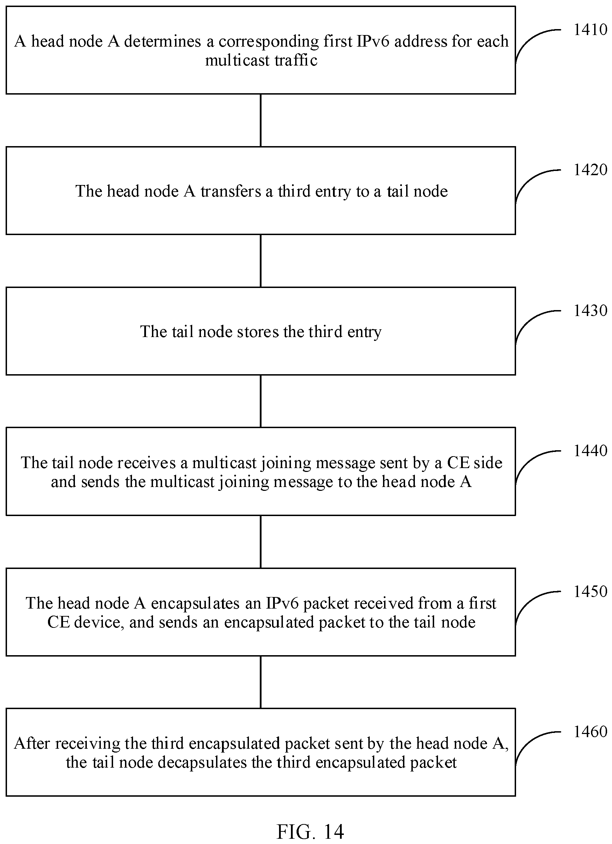

Specific implementations of packet encapsulation and forwarding are described in detail with reference to FIG. 14 by using an example in which BIERv6 encapsulation is performed on an IPv6 packet. It should be understood that the following examples are merely intended to help a person skilled in the art understand the embodiments of this application, instead of limiting the embodiments of this application to a specific numerical value or a specific scenario shown in the examples. It is clearly that a person skilled in the art can make various equivalent modifications or changes based on the examples, and such modifications and changes also fall within the scope of the embodiments of this application.

A method shown in FIG. 14 may include steps 1410 to 1460. The following separately describes steps 1410 to 1460 in detail.

Step 1410: A head node A determines a corresponding first IPv6 address for each multicast traffic.

In this embodiment of this application, the head node A may determine a corresponding first IPv6 address for each multicast traffic (S, G), and the first IPv6 address may be filled in a source address SA field in an outer IPv6 header.

In this embodiment of this application, there are a plurality of specific implementations in which the head node A determines a corresponding first IPv6 address for each multicast traffic. For example, the head node A may dynamically allocate a corresponding first IPv6 address in an address range to multicast traffic in VRF. For another example, the head node A and a tail node each statically configure a first IPv6 address corresponding to each multicast traffic in advance. The following separately describes in detail the two implementations.

For example, the head node A may dynamically allocate for the tail node the corresponding first IPv6 address in the address range to the multicast traffic in the VRF. Configuration at the head node A is as follows:

```
          segment-routing ipv6
             locator a1 2001:A:1:1::/64
          ip vpn-instance vrf1
          ipv6-address
                mvpn
                 sender-enable
                 spmsi-tunnel
                   Inner-ipv6-sa-da-pop enable locator a1
```

It should be understood that, for example, in this application, the head node A may dynamically allocate a same first IPv6 address to all multicast traffic (S, G) in same VRF. For example, the head node A allocates first IPv6 address=2001:A:1:1::1001 to VRF 1. For another example, the head node A may further allocate different first IPv6 addresses to different multicast traffic (S, G) in same VRF. For example, the head node A allocates first IPv6 address=2001:A:1:1::1001 to multicast traffic (SI, G1) in VRF 1, and allocates first IPv6 address=2001:A:1:1::1002 to multicast traffic (S2, G2) in the VRF 1.

For ease of description, the following uses an example in which the head node A allocates first IPv6 address=2001:A:1:1::1001 to multicast traffic (S1v6, G1v6) in the VRF 1 for description.

For example, the head node A and the tail node each statically configure the first IPv6 address corresponding to each multicast traffic. The head node A and the tail node each configure a correspondence between a source address SA and a destination address DA in the inner IPv6 header and the first IPv6 address in an outer IPv6 header. For example, the head node A and the tail node each configure an SA address segment in the outer IPv6 header, a DA address segment in the inner IPv6 header, an SA address segment in the inner IPv6 header, a rule for mapping the DA in the inner IPv6 header to the DA in the outer IPv6 header, and a rule for mapping the SA in the inner IPv6 header to the DA in the outer IPv6 header.

By way of example and not limitation, it is assumed that the SA address segment in the outer IPv6 header is 2001:x:x:x::/64; the DA address segment in the inner IPv6 header is FF05:y:y:y:y:y::/96; the SA address segment in the inner IPv6 header is 2002:z:z:z:z:z::/96; the rule for mapping the DA in the inner IPv6 header to the SA in the outer IPv6 header is as follows: The last 32 bits of the DA address segment in the inner IPv6 header are mapped to bits [97 to 128] of the SA in the outer IPv6 header; and the rule for mapping the SA in the inner IPv6 header to the SA in the outer IPv6 header is as follows: The last 32 bits of the SA address segment in the inner IPv6 header are mapped to bits [65 to 96] of the SA in the outer IPv6 header. For example, SA=2002:z:z:z:z:z:0000:0001 in the inner IPv6 header and DA=FF05:y:y:y:y:y:0000:0002 in the inner IPv6 header. According to the mapping rule, the head node A determines, based on the DA and SA in the inner IPv6 header, the IPv6 address corresponding to the multicast traffic (S1, G1) in the VRF 1, that is, SA=2001:x:x:x:0000:0001:0000:0002 in the outer IPv6 header.

In this embodiment of this application, after determining a corresponding first IPv6 address for each multicast traffic, the head node A may locally store a third entry. The third entry includes a correspondence between multicast traffic and a first IPv6 address. Optionally, the first entry may further include an indication flag, and the indication flag is used to indicate the head node A to delete an SA field and a DA field from an IPv6 header in inner encapsulation of the IPv6 packet. Optionally, the first entry may further include an identifier of VRF to which multicast traffic belongs, for example, the identifier is VRF 1. Optionally, the first entry may further include context of a first IPv6 address, for example, an identifier (an IP address and/or a BFIR-ID of A) of the head node A that determines a corresponding first IPv6 address for multicast traffic.

For ease of description, the following uses an example in which the head node A allocates first IPv6 address=2001:A:1:1::1001 to multicast traffic (SI, G1) in VRF 1 for description, where S1 is S1v6, and G1 is G1v6. A possible third entry stored by the head node A is as follows:
(BFIR-ID=BFR-ID of the head node A=4, first IPv6 address=2001:A:1:1::1001, VRF 1, S1v6, G1v6, V6POPSD)

Step 1420: The head node A transfers the third entry to a tail node.

The head node A may send the third entry to the tail node D/E/F by using a BGP protocol, which may also be referred to as a BGP-MVPN below. Specifically, by way of example and not limitation, the head node A may send the third entry to the tail node D/E/F by using an S-PMSIA-D routing message of the BGP-MVPN.

Optionally, the node A/D/E/F may establish a BGP neighbor relationship with each other before step 1420.

Step 1430: The tail node stores the third entry.

For example, a tail node is a node E, and an identifier of VRF 1 is an identifier of a route-target for the VRF 1. An identifier of a route-target for the VRF 1 is configured on the tail node E. After receiving the third entry sent by the head node A by using the S-PMSIA-D routing message, the tail node E determines, based on the fact that the identifier of the VRF 1 in the third entry is the identifier of the route-target for the VRF 1, that the identifier of the route-target for the VRF 1 matches the locally configured identifier of the route-target. Therefore, it may be determined that the S-PMSIA-D routing message corresponds to the VRF 1 in the current node. Correspondingly, the tail node E may store the third entry included in the S-PMSIA-D routing message.

A possible third entry stored by the tail node E is as follows:
(BFIR-ID=BFR-ID of the head node A=4, first IPv6 address=2001:A:1:1::1001, VRF 1, S1v6, G1v6, V6POPSD)

It should be understood that a VPN may be uniquely identified by using a first IPv6 address. For example, both a node A and a node F may each send an S-PMSIA-D route message to a node D, and first IPv6 addresses corresponding to VRF 1 carried in the sent S-PMSIA-D route messages are different. The node D determines, based on the first IPv6 addresses in the packets, VRF to which the packet belongs.

Step 1440: The tail node receives a multicast joining message sent by a CE side, and sends the multicast joining message to the head node A.

The tail node D/E/F may send the BGP-MVPN message to the head node A. The BGP-MVPN message may be, for example, a C-multicast route or a leaf A-D route.

Step 1450: The head node A encapsulates the IPv6 packet received from a first CE device, and sends an encapsulated IPv6 packet to the tail node.

After receiving the multicast joining message from the tail node D/E/F, the head node A encapsulates the IPv6 packet received from the first CE side.

Specifically, the head node A may determine, based on SA=S1v6, DA=G1v6 in the IPv6 header in the IPv6 packet, and the locally stored third entry (BFIR-ID=BFR-ID of the head node A=4, first IPv6 address=2001:A:1:1::1001, VRF 1, S1v6, G1v6, V6POPSD), address identifier BFIR-ID=4 corresponding to SA=S1v6 and DA=G1v6, and first IPv6 address=2001:A:1:1::1001. In BIERv6 encapsulation, an outer encapsulated address identifier of the IPv6 packet may include an outer IPv6 header and an IPv6 extension header. An SA field in the outer IPv6 header is filled with a first IPv6 address, and the IPv6 extension header includes a BIER header. Context of the first IPv6 address is encapsulated in the BIER header, for example, a BFR-ID of a node encapsulated in a BIFT-ID field in the BIER header. Therefore, it may be determined that an encapsulation type corresponding to SA=S1v6 and DA=G1v6 is the BIERv6 encapsulation.

The head node A may delete, according to the indication flag V6POPSD corresponding to SA=S1v6 and DA=G1v6 in the IPv6 header in the first entry, and the configuration in step 1410, a field SA=S1v6 and a field DA=G1v6 from the IPv6 header in the IPv6 packet, to obtain a second packet.

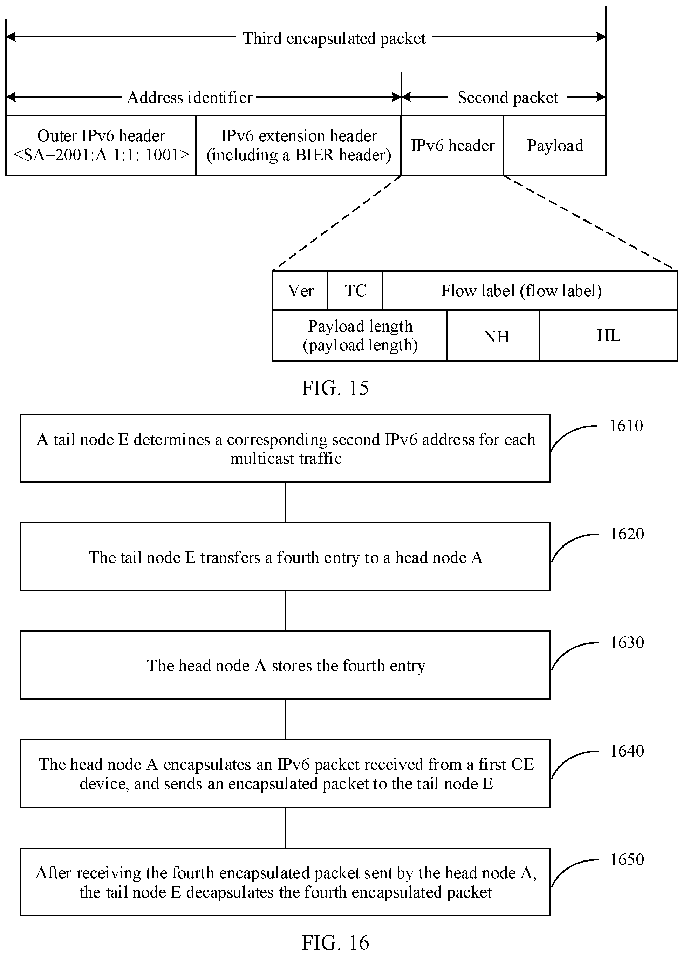

The head node A may further encapsulate the outer IPv6 header and the outer IPv6 extension header including the BIER header in the second packet based on the address identifier corresponding to SA=S1v6 and DA=G1v6, to obtain a third encapsulated packet. Specifically, BFIR-ID=4 may be filled in the BIER header in the IPv6 extension header, and first IPv6 address=2001:A:1:1::1001 is filled in the SA field in the outer IPv6 header. For a format of the obtained third encapsulated packet, refer to FIG. 15.

In this embodiment of this application, the head node A may send the third encapsulated packet shown in FIG. 15 to the tail node.

Step 1460: After receiving the third encapsulated packet sent by the head node A, the tail node decapsulates the third encapsulated packet.

After receiving the third encapsulated packet shown in FIG. 15 sent by the head node A, the tail node D/E/F determines, based on the fact that the outer encapsulated address identifier is first IPv6 address=2001:A:1:1::1001, BIFT-ID=4 in the BIER header in the IPv6 extension header, and the possible third entry (BFIR-ID=BFR-ID of the head node A=4, first IPv6 address=2001:A:1:1::1001, VRF 1, S1v6, G1v6, V6POPSD) stored by the tail node E in step 1430, SA=S1v6 and DA=G1v6 in the IPv6 header corresponding to first IPv6 address=2001:A:1:1::1001 and BIFT-ID=4. The tail node D/E/F may fill SA=S1v6 and DA=G1v6 in the second packet shown in FIG. 15, so that the second packet includes the field SA=S1v6 and the field DA=G1v6.

The tail node D/E/F removes the outer address identifier of the first encapsulated packet, and sends, based on the field SA=S1v6 and the field DA=G1v6 in the second packet, the second packet including the field SA=S1v6 and the field DA=G1v6 to a user side connected to the tail node.

The packet obtained after the BIERv6 encapsulation in this embodiment of this application is shown in FIG. 15. Compared with the encapsulated packet shown in FIG. 8, the second packet does not include the field SA=S1v6 and the field DA=G1v6 in the IPv6 header because the SA field and the DA field in the IPv6 header are deleted. This reduces storage space occupied by the SA field and the DA field, thereby reducing packet encapsulation overheads.

For example, IPv6 encapsulation is performed on an IPv6 packet. Specific implementations of packet encapsulation and forwarding are described in detail with reference to FIG. 16. It should be understood that the following examples are merely intended to help a person skilled in the art understand the embodiments of this application, instead of limiting the embodiments of this application to a specific numerical value or a specific scenario shown in the examples. It is clearly that a person skilled in the art can make various equivalent modifications or changes based on the examples, and such modifications and changes also fall within the scope of the embodiments of this application.

The method shown in FIG. 16 may include steps 1610 to 1660. The following separately describes steps 1610 to 1660 in detail.

It should be understood that, for ease of description, the following uses an example in which a tail node is a node E for description.

Step 1610: The tail node E determines a corresponding second IPv6 address for each multicast traffic.

In this embodiment of this application, the tail node E determines a corresponding second IPv6 address for each multicast traffic, and the second IPv6 address may be filled in a destination address DA field in an outer IPv6 header.

In this embodiment of this application, there are a plurality of specific implementations in which the tail node E determines a corresponding second IPv6 address for each multicast traffic. For example, the tail node E may dynamically allocate a corresponding second IPv6 address in an address range to multicast traffic in VRF. For another example, the head node A and a tail node each statically configure a second IPv6 address corresponding to each multicast traffic in advance. The following separately describes in detail the two implementations.

For example, the tail node E may dynamically allocate for a head node A the corresponding second IPv6 address in the address range to the multicast traffic in the VRF. Configuration at the tail node E is as follows:

```
          segment-routing ipv6
             locator a1 2001:E:1:1::/64
          ip vpn-instance vrf1
          ipv6-address
          mvpn
               spmsi-tunnel
              enable locator a1
```

It should be understood that, for example, in this application, the tail node E may dynamically allocate a same second IPv6 address to all multicast traffic (S, G) in same VRF. For example, the tail node E allocates second IPv6 address=2001:E:1:1: 0:1:0:1001 in VRF 1. For another example, the tail node E may further allocate different second IPv6 addresses to different multicast traffic (S, G) in same VRF. For example, the tail node E allocates second IPv6 address=2001:E:1:1:0:1:0:1001 to multicast traffic (SI, G1) in VRF 1, and allocates second IPv6 address=2001:E:1:1:0:1:0:1002 to multicast traffic (S2, G2) in the VRF 1.

In this embodiment of this application, after determining a corresponding second IPv6 address for each multicast traffic, the tail node E may locally store a fourth entry. The fourth entry includes a correspondence between multicast traffic and a second IPv6 address. Optionally, the fourth entry may further include an indication flag, and the indication flag is used to indicate the head node A to delete an SA field and a DA field from an IPv6 header in the inner encapsulation of the IPv6 packet. Optionally, the fourth entry may further include an identifier of VRF to which multicast traffic belongs, for example, the identifier is VRF 1.

For ease of description, the following uses an example in which the tail node E allocates second IPv6 address=2001:E:1:1:0:1:0:1001 to multicast traffic (S1v6, G1v6) in the VRF 1. A possible fourth entry stored by the tail node E is as follows:
(Second IPv6 address=2001:E:1:1:0:1:0:1001, VRF 1, S1v6, G1v6, V6POPSD)

Step 1620: The tail node E transfers the fourth entry to the head node A.

The tail node E may send the fourth entry to the head node A by using a BGP protocol (which may also be referred to as a BGP-MVPN below). Specifically, by way of example and not limitation, the tail node E may send the fourth entry to the head node A by using a leaf A-D routing message in the BGP-MVPN.

Optionally, the node A/D/E/F may establish a BGP neighbor relationship with each other before step 1620.

Step 1630: The head node A stores the fourth entry.

For example, an identifier of VRF 1 is an identifier of a route-target for the VRF 1. An identifier of a route-target for the VRF 1 is configured on the head node A. After receiving the fourth entry that is sent by the tail node E by using the leaf A-D routing message, the head node A determines, based on the fact that the identifier of the VRF 1 is the identifier of the route-target for the VRF 1 in the fourth entry, that the identifier of the route-target for the VRF 1 matches the locally configured identifier of the route-target. Therefore, it may be determined that the leaf A-D routing message corresponds to the VRF 1 in the current node. Correspondingly, the head node A may store the fourth entry included in the leaf A-D routing message.

A possible fourth entry stored by the head node A is as follows:
(Second IPv6 address=2001:E:1:1:0:1:0:1001, VRF 1, S1v6, G1v6, V6POPSD)

Step 1640: The head node A encapsulates the IPv6 packet received from a first CE device, and sends an encapsulated IPv6 packet to the tail node E.

The head node A may encapsulate the IPv6 packet received from the CE side. Specifically, the head node A may determine, based on SA=S1v6, DA=G1v6 in the IPv6 header in the IPv6 packet, and the locally stored fourth entry (Second IPv6 address=2001:E:1:1:0:1:0:1001, VRF 1, S1v6, G1v6, V6POPSD), that the address identifier corresponding to SA=S1v6 and DA=G1v6 is second IPv6 address=2001:E:1:1:0:1:0:1001. In IPv6 encapsulation, an outer encapsulated address identifier of the IPv6 packet may be an outer IPv6 header, and a DA field in the outer IPv6 header is filled with a second IPv6 address. Therefore, it may be determined that an encapsulation type corresponding to SA=S1v6 and DA=G1v6 is the IPv6 encapsulation.

The head node A may delete, according to the indication flag V6POPSD corresponding to SA=S 1v6 and DA=G1v6 in the IPv6 header in the fourth entry and the configuration in step 1410, a field SA=S1v6 and a field DA=G1v6 from the IPv6 header in the IPv6 packet, to obtain a second packet.

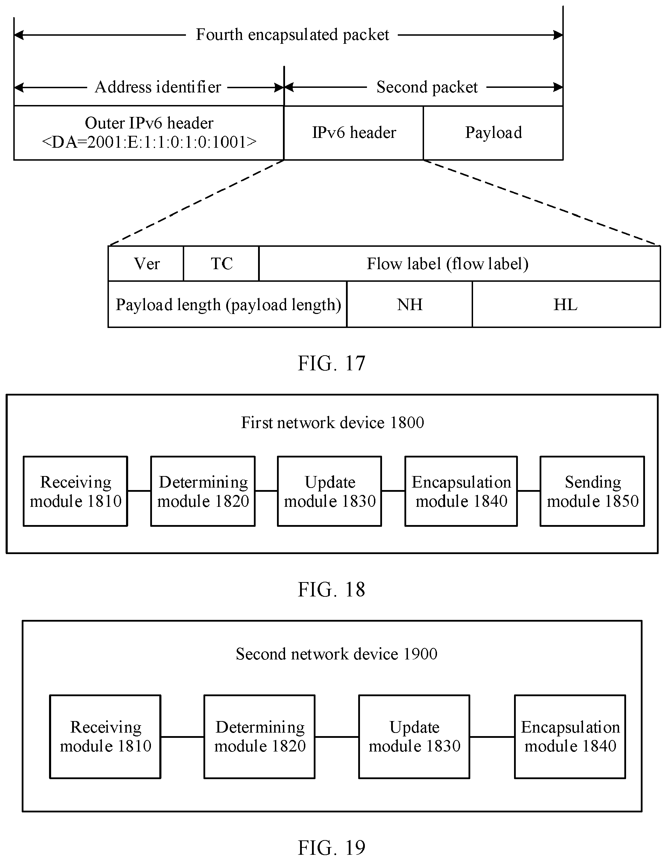

The head node A may further encapsulate second IPv6 address=2001:E:1:1:0:1:0:1001 in the DA field in the outer IPv6 header based on the address identifier corresponding to SA=S1v6 and DA=G1v6, to obtain a fourth encapsulated packet. The fourth encapsulated packet includes the outer encapsulated address identifier and the inner second packet. For a format of the fourth encapsulated packet, refer to FIG. 17.

Configuration in which the head node A deletes the SA field and the DA field from the IPv6 header in the inner encapsulation of the IPv6 packet is as follows:

```
          ip vpn-instance vrf1
          ipv6-address
          MVPN
             sender-enable
             spmsi-tunnel
               inner-ipv6-sa-da-pop
```

In this embodiment of this application, the head node A may send the fourth encapsulated packet shown in FIG. 17 to the tail node E.

Step 1650: After receiving the fourth encapsulated packet sent by the head node A, the tail node E decapsulates the fourth encapsulated packet.

After receiving the second encapsulated packet shown in FIG. 17 sent by the head node A, the tail node E determines, based on second IPv6 address=2001:E:1:1:0:1:0:1001 filled in the destination address DA field in the outer IPv6 header, and the possible fourth entry (Second IPv6 address=2001:E:1:1:0:1:0:1001, VRF 1, S1v6, G1v6, V6POPSD) stored by the tail node E in step 1610, SA=S1v6 and DA=G1v6 in the IPv6 header corresponding to second IPv6 address=2001:E:1:1:0:1:0:1001. The tail node E may fill SA=S1v6 and DA=G1v6 in the second packet shown in FIG. 17, so that the second packet includes a field SA=S1v6 and a field DA=G1v6.

The tail node E removes the outer address identifier of the second encapsulated packet, and sends, based on the field SA=S1v6 and the field DA=G1v6 in the second packet, the second packet including the field SA=S1v6 and the field DA=G1v6 to a user side connected to the tail node.

The packet obtained after the IPv6 encapsulation in this embodiment of this application is shown in FIG. 17. Compared with the packet obtained after the IPv6 encapsulation shown in FIG. 4, the second packet does not include the field SA=S1v6 and the field DA=G1v6 in the IPv6 header because the SA field and the DA field in the IPv6 header are deleted. This reduces storage space occupied by the SA field and the DA field, thereby reducing packet encapsulation overheads.

It should be further noted that the method provided in this embodiment of this application is also applied to a unicast scenario or a scenario in which no BGP message is used, provided that the foregoing entries are separately created on the head node and the tail node.

The foregoing describes in detail the method provided in the embodiments of this application with reference to FIG. 1 to FIG. 17. The following describes in detail apparatus embodiments in this application with reference to FIG. 18 to FIG. 20. It should be understood that descriptions of the method embodiments correspond to descriptions of the apparatus embodiments. Therefore, for a part that is not described in detail, refer to the foregoing method embodiments.

FIG. 18 is a schematic diagram of a structure of a first network device 1800 according to an embodiment of this application. The first network device 1800 shown in FIG. 18 may perform the corresponding steps performed by the first network device in the methods in the foregoing embodiments. The first network device 1800 is an ingress node in an MVPN, and the MVPN further includes a second network device. As shown in FIG. 18, the first network device 1800 includes a receiving module 1810, a determining module 1820, an update module 1830, an encapsulation module 1840, and a sending module 1850.

The receiving module 1810 is configured to receive a first packet sent by a first customer edge CE device, where the first packet includes a first internet protocol version 6 IPv6 header and a first payload, and the first IPv6 header includes a first source address SA and a first destination address DA.

The determining module 1820 is configured to determine, according to a first entry, a first address identifier corresponding to the first SA and the first DA, where the first entry includes a correspondence between the first SA and the first DA and the first address identifier, and the first address identifier is used to indicate the first SA and the first DA.

The update module 1830 is configured to update the first IPv6 header in the first packet to a second IPv6 header to obtain a second packet, where the second IPv6 header does not include a first SA field and a first DA field, a value of the first SA field is the same as a value of the first SA, and a value of the first DA field is the same as a value of the first DA.

The encapsulating module 1840 is configured to encapsulate the second packet by using the first address identifier to obtain a first encapsulated packet, where the first encapsulated packet includes the first address identifier, and the first address identifier is located at an outer layer of the second packet.

The sending module 1850 is configured to send the first encapsulated packet to the second network device.

Optionally, the first entry further includes a first indication flag, and the first indication flag is used to indicate the first network device to update the first IPv6 header to the second IPv6 header.

The update module is specifically configured to update the first IPv6 header in the first packet to the second IPv6 header according to the first indication flag to obtain the second packet.

Optionally, the first address identifier includes first multi-protocol label switching MPLS.

Optionally, the first address identifier further includes a bit index explicit replication BIER header.

Optionally, the first address identifier includes a third IPv6 header, a third IPv6 address is encapsulated in an SA field in the third IPv6 header, and the third IPv6 address corresponds to the first SA and the first DA.

Optionally, the first address identifier includes a fourth IPv6 header, a fourth IPv6 address is encapsulated in a DA field in the fourth IPv6 header, and the fourth IPv6 address corresponds to the first SA and the first DA.

Optionally, the first address identifier further includes an IPv6 extension header, and the IPv6 extension header includes a BIER header.

The sending module 1850 is further configured to send the first entry to the second network device.

Optionally, the first network device 1800 further includes:
an allocation module 1860, configured to allocate the corresponding first address identifier to the first SA and the first DA.

Optionally, the receiving module 1810 is further configured to receive the first entry sent by the second network device.

Optionally, the first entry further includes a virtual routing and forwarding VRF identifier corresponding to the first SA and the first DA.

FIG. 19 is a schematic diagram of a structure of a second network device 1900 according to an embodiment of this application. The second network device 1900 shown in FIG. 19 may perform the corresponding steps performed by the second network device in the methods in the foregoing embodiments. The second network device 1900 is an egress node in an MVPN, and the MVPN further includes a first network device. As shown in FIG. 19, the second network device 1900 includes a receiving module 1910, a determining module 1920, an update module 1930, and a sending module 1940.

The receiving module 1910 is configured to receive a first encapsulated packet sent by the first network device, where the first encapsulated packet includes a second packet and a first address identifier, the first address identifier is located at an outer layer of the second packet, the second packet includes a second IPv6 header and a first pay load, and the second IPv6 header does not include a first SA field and a first DA field.

The determining module 1920 is configured to determine, according to a first entry, a first SA and a first DA that correspond to the first address identifier, where the first entry includes a correspondence between the first SA and the first DA and the first address identifier, the first address identifier is used to indicate the first SA and the first DA, a value of the first SA is the same as a value of the first SA field, and a value of the first DA is the same as a value of the first DA field.

The update module 1930 is configured to update the second IPv6 header to a first IPv6 header to obtain a first packet, where the first IPv6 header includes the first SA field and the first DA field.

The sending module 1940 is configured to send the first payload in the first packet to a second customer edge CE device based on the first SA and the first DA field in the first IPv6 header.

Optionally, the first entry further includes a first indication flag corresponding to the first SA and the first DA, and the first indication flag is used to indicate the first network device to update the first IPv6 header to the second IPv6 header. The second network device updates the second IPv6 header to the first IPv6 header according to the first indication flag to obtain the first packet.

Optionally, the first address identifier includes first multi-protocol label switching MPLS.

Optionally, the first address identifier further includes a bit index explicit replication BIER header.

Optionally, the first address identifier includes a third IPv6 header, a third IPv6 address is encapsulated in a source address SA field in the third IPv6 header, and the third IPv6 address corresponds to the first SA and the first DA.

Optionally, the first address identifier includes a fourth IPv6 header, a fourth IPv6 address is encapsulated in a destination address DA field in the fourth IPv6 header, and the fourth IPv6 address corresponds to the first SA and the first DA.

Optionally, the first address identifier further includes an IPv6 extension header, and the IPv6 extension header includes a BIER header.

Optionally, the receiving module 1910 is further configured to receive the first entry sent by the first network device.

Optionally, the sending module 1940 is further configured to send the first entry to the first network device.

Optionally, the second network device 1900 further includes an allocation module 1950, configured to allocate the corresponding first address identifier to the first SA and the first DA.

Optionally, the first entry further includes a virtual routing and forwarding VRF identifier corresponding to the first SA and the first DA.

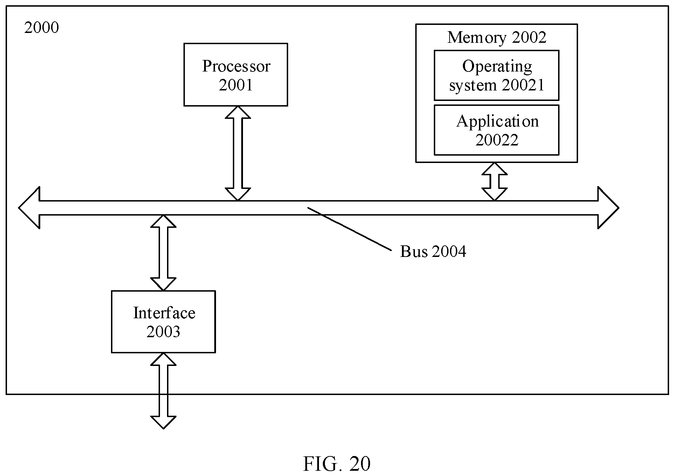

FIG. 20 is a schematic diagram of a hardware structure of a first network device 2000 according to an embodiment of this application. The first network device 2000 shown in FIG. 20 may perform the corresponding steps performed by the first network device in the methods in the foregoing embodiments.

As shown in FIG. 20, the first network device 2000 includes a processor 2001, a memory 2002, an interface 2003, and a bus 2004. The interface 2003 may be implemented in a wireless or wired manner, and may be specifically a network adapter. The processor 2001, the memory 2002, and the interface 2003 are connected through the bus 2004.

The interface 2003 may specifically include a transmitter and a receiver, and is used by the first network device to send information to and receive information from the second network device and the first CE device in the foregoing embodiments. For example, the interface 2003 is configured to support receiving a first packet sent by the first customer edge CE device. For another example, the interface 2003 is configured to send the first encapsulated packet to the second network device. For another example, the interface 2003 is used to send the first entry to the second network device. For example, the interface 2003 is used to support step 910 and step 950 in FIG. 9. The processor 2001 is configured to perform processing performed by the first network device in the foregoing embodiment. For example, the processor 2001 is configured to determine, according to a first entry, a first address identifier corresponding to the first SA and the first DA, update the first IPv6 header in the first packet to a second IPv6 header to obtain a second packet; encapsulate the second packet by using the first address identifier to obtain a first encapsulated packet; and/or perform another process of the technology described in this specification. For example, the processor 2001 is configured to support step 920, step 930, and step 940 in FIG. 9. The memory 2002 includes an operating system 20021 and an application 20022, and is configured to store programs, code, or instructions. When executing the programs, the code, or the instructions, a processor or a hardware device may complete a processing process of the first network device in the method embodiments. Optionally, the memory 2002 may include a read-only memory (read-only memory, ROM) and a random access memory (random access memory, RAM). The ROM includes a basic input/output system (basic input/output system, BIOS) or an embedded system, and the RAM includes an application and an operating system. When the first network device 2000 needs to run, a bootloader in the BIOS or the embedded system that is built into the ROM is used to boot a system to start, and boot the first network device 2000 to enter a normal running state. After entering the normal running state, the first network device 2000 runs the application and the operating system in the RAM, to complete the processing processes of the first network device 2000 in the method embodiments.

It may be understood that FIG. 20 shows only a simplified design of the first network device 2000. In actual application, the first network device may include any quantity of interfaces, processors, or memories.

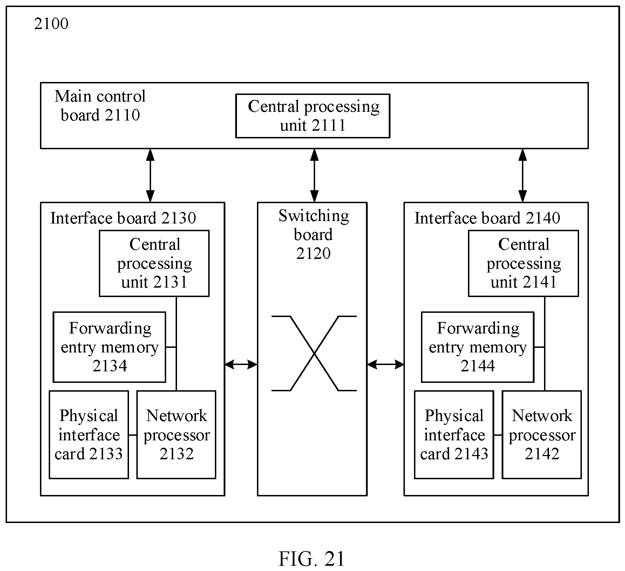

FIG. 21 is a schematic diagram of a hardware structure of another first network device 2100 according to an embodiment of this application. The first network device 2100 shown in FIG. 21 may perform the corresponding steps performed by the first network device in the methods in the foregoing embodiments.

As shown in FIG. 21, the first network device 2100 includes a main control board 2110, an interface board 2130, a switching board 2120, and an interface board 2140. The main control board 2110, the interface boards 2130 and 2140, and the switching board 2120 are connected to a system backboard through a system bus for interworking. The main control board 2110 is configured to complete functions such as system management, device maintenance, and protocol processing. The switching board 2120 is configured to exchange data between interface boards (the interface board is also referred to as a line card or a service board). The interface boards 2130 and 2140 are configured to provide various service interfaces (for example, a POS interface, a GE interface, and an ATM interface), and forward a data packet.

The interface board 2130 may include a central processing unit 2131, a forwarding entry memory 2134, a physical interface card 2133, and a network processor 2132. The central processing unit 2131 is configured to control and manage the interface board, and communicate with a central processing unit on the main control board. The forwarding entry memory 2134 is configured to store an entry, for example, the first entry, the second entry, the third entry, and the fourth entry. The physical interface card 2133 is configured to receive and send traffic. The network memory 2132 is configured to control, according to the entry, the physical interface card 2133 to receive and send traffic.

Specifically, the physical interface card 2133 is configured to receive a first packet sent by the first customer edge CE device. After receiving the first packet sent by the first customer edge CE device, the physical interface card 2133 sends the first packet to the central processing unit 2111 by using the central processing unit 2131. The central processing unit 2111 processes the first packet.

The central processing unit 2111 is further configured to determine, according to a first entry, a first address identifier corresponding to the first SA and the first DA. The central processing unit 2111 is further configured to update the first IPv6 header in the first packet to a second IPv6 header to obtain a second packet. The central processing unit 2111 is further configured to encapsulate the second packet by using the first address identifier to obtain a first encapsulated packet.

The central processing unit 2111 is further configured to control the network memory 2132 to obtain the first entry in the forwarding entry memory 2134, and the central processing unit 2131 is further configured to control the network memory 2132 to send the first packet to the first network device through the physical interface card 2133. The central processing unit 2131 is further configured to control the network memory 2132 to send the first entry to a second network device through the physical interface card 2133.

It should be understood that an operation on the interface board 2140 is consistent with an operation on the interface board 2130 in this embodiment of this application. For brevity, details are not described. It should be understood that the first network device 2100 in this embodiment may correspond to the functions and/or the various implemented steps in the method embodiments. Details are not described herein again.

In addition, it should be noted that there may be one or more main control boards, and when there are a plurality of main control boards, the main control boards may include an active main control board and a standby main control board. There may be one or more interface boards. The first network device having a stronger data processing capability provides more interface boards. There may also be one or more physical interface cards on the interface board. There may be no switching board, or there may be one or more switching boards. When there are a plurality of switching boards, load sharing and redundancy backup may be implemented together. In a centralized forwarding architecture, the first network device may not need the switching board, and the interface board provides a function of processing service data of an entire system. In a distributed forwarding architecture, the first network device may have at least one switching board, and data exchange between a plurality of interface boards is implemented through the switching board, to provide a large-capacity data exchange and processing capability. Therefore, a data access and processing capability of the first network device in the distributed architecture is better than a data access and processing capability of the device in the centralized architecture. A specific architecture that is to be used depends on a specific networking deployment scenario. This is not limited herein.

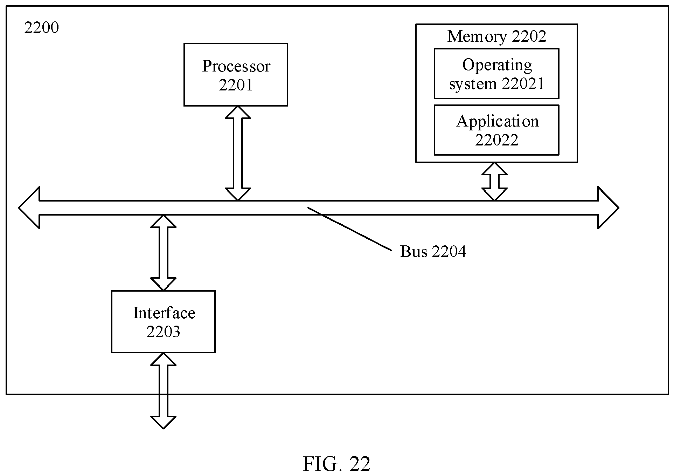

FIG. 22 is a schematic diagram of a hardware structure of a second network device 2200 according to an embodiment of this application. The second network device 2200 shown in FIG. 22 may perform the corresponding steps performed by the second network device in the methods in the foregoing embodiments.

As shown in FIG. 22, the second network device 2200 includes a processor 2201, a memory 2202, an interface 2203, and a bus 2204. The interface 2203 may be implemented in a wireless or wired manner, and may be specifically a network adapter. The processor 2201, the memory 2202, and the interface 2203 are connected through the bus 2204.

The interface 2203 may specifically include a transmitter and a receiver, and is used by the second network device to send information to and receive information from the first network device and the second CE device in the foregoing embodiment. For example, the interface 2203 is used to support receiving the first encapsulated packet sent by the first network device. For another example, the interface 2203 is used to send the first payload in the first packet to a second customer edge CE device based on the first SA and the first DA field in the first IPv6 header. The processor 2201 is configured to perform processing performed by the second network device in the foregoing embodiment. For example, the processor 2201 is configured to: determine, according to a first entry, a first SA and a first DA that correspond to the first address identifier; update the second IPv6 header to a first IPv6 header to obtain a first packet; and/or perform another process of the technology described in this specification. The memory 2202 includes an operating system 22021 and an application 22022, and is configured to store programs, code, or instructions. When executing the programs, the code, or the instructions, the processor or a hardware device may complete the processing processes of the second network device in the method embodiments. Optionally, the memory 2202 may include a read-only memory (read-only memory, ROM) and a random access memory (random access memory, RAM). The ROM includes a basic input/output system (basic input/output system, BIOS) or an embedded system, and the RAM includes an application and an operating system. When the second network device 2200 needs to run, a bootloader in the BIOS or the embedded system that is built into the ROM is used to boot a system to start, and boot the second network device 2200 to enter a normal running state. After entering the normal running state, the second network device 2200 runs the application and the operating system in the RAM, to complete the processing processes of the second network device 2200 in the method embodiments.

It may be understood that FIG. 22 shows only a simplified design of the second network device 2200. In actual application, the second network device may include any quantity of interfaces, processors, or memories.

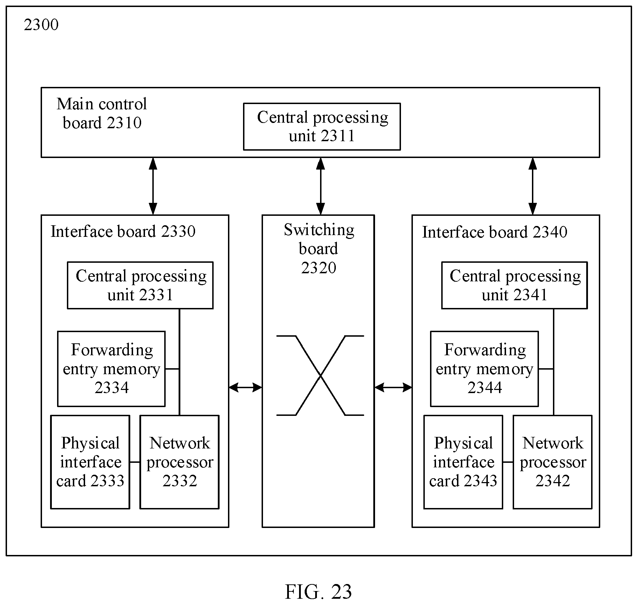

FIG. 23 is a schematic diagram of a hardware structure of another second network device 2300 according to an embodiment of this application. The second network device 230 shown in FIG. 23 may perform the corresponding steps performed by the second network device in the methods in the foregoing embodiments.

As shown in FIG. 23, the second network device 230 includes a main control board 2310, an interface board 2330, a switching board 2320, and an interface board 2340. The main control board 2310, the interface boards 2330 and 2340, and the switching board 2320 are connected to a system backboard through a system bus for interworking. The main control board 2310 is configured to complete functions such as system management, device maintenance, and protocol processing. The switching board 2320 is configured to exchange data between interface boards (the interface board is also referred to as a line card or a service board). The interface boards 2330 and 2340 are configured to provide various service interfaces (for example, a POS interface, a GE interface, and an ATM interface), and forward a data packet.

The interface board 2330 may include a central processing unit 2331, a forwarding entry memory 2334, a physical interface card 2333, and a network processor 2332. The central processing unit 2331 is configured to control and manage the interface board, and communicate with a central processing unit on the main control board. The forwarding entry memory 2334 is configured to store an entry, for example, the first entry, the second entry, the third entry, and the fourth entry. The physical interface card 2333 is configured to receive and send traffic. The network memory 2332 is configured to control, according to the entry, the physical interface card 2333 to receive and send traffic.

Specifically, the physical interface card 2333 is configured to receive a first encapsulated packet sent by the first network device. After receiving the first encapsulated packet sent by the first network device, the physical interface card 2333 sends the first encapsulated packet to a central processing unit 2311 by using the central processing unit 2331. The central processing unit 2311 processes the first encapsulated packet.

The central processing unit 2311 is further configured to determine, according to a first entry, a first SA and a first DA that correspond to the first address identifier. The central processing unit 2311 is further configured to update the second IPv6 header to a first IPv6 header to obtain a first packet.

The central processing unit 2311 is further configured to control the network memory 2332 to obtain the first entry in the forwarding entry memory 2334, and the central processing unit 2331 is further configured to control the network memory 2332 to send the first encapsulated packet to the second network device through the physical interface card 2333. The central processing unit 2331 is further configured to control the network memory 2332 to send the first payload in the first packet to a second customer edge CE device through the physical interface card 2333.

It should be understood that an operation on the interface board 2340 is consistent with an operation on the interface board 2330 in this embodiment of this application. For brevity, details are not described. It should be understood that the second network device 2300 in this embodiment may correspond to the functions and/or the various implemented steps in the method embodiments. Details are not described herein again.

In addition, it should be noted that there may be one or more main control boards, and when there are a plurality of main control boards, the main control boards may include an active main control board and a standby main control board. There may be one or more interface boards. A second network device having a stronger data processing capability provides more interface boards. There may also be one or more physical interface cards on the interface board. There may be no switching board, or there may be one or more switching boards. When there are a plurality of switching boards, load sharing and redundancy backup may be implemented together. In a centralized forwarding architecture, the second network device may need no switching board, and the interface board provides a function of processing service data of an entire system. In a distributed forwarding architecture, the second network device may have at least one switching board, and data exchange between a plurality of interface boards is implemented through the switching board, to provide a large-capacity data exchange and processing capability. Therefore, a data access and processing capability of the second network device in the distributed architecture is better than a data access and processing capability of the device in the centralized architecture. A specific architecture that is to be used depends on a specific networking deployment scenario. This is not limited herein.

An embodiment of this application further provides a computer-readable medium, configured to store a computer program. The computer program includes instructions used to perform the method in any possible implementation of any one of the foregoing aspects. The readable medium may be a read-only memory (read-only memory, ROM) or a random access memory (random access memory, RAM). This is not limited in this embodiment of this application.

An embodiment of this application further provides a computer program product, applied to a first network device or a second network device. The computer program product includes computer program code. When the computer program code is executed by a computer, the computer is enabled to perform the method in any possible implementation of any one of the foregoing aspects.

An embodiment of this application further provides a chip system, applied to a first network device or a second network device. The chip system includes at least one processor, at least one memory, and an interface circuit. The interface circuit is responsible for information exchange between the chip system and the outside. The at least one memory, the interface circuit, and the at least one processor are interconnected through a line. The at least one memory stores instructions, and the instructions are executed by the at least one processor, to perform operations of the first network device or the second network device in the methods in the foregoing aspects.

An embodiment of this application further provides a computer program product, applied to a first network device or a second network device. The computer program product includes a series of instructions. When the instructions are run, operations of the first network device or the second network device in the methods according to the foregoing aspects are performed.

It should be understood that, in the embodiments of this application, sequence numbers of the foregoing processes do not mean execution sequences. The execution sequences of the processes should be determined based on functions and internal logic of the processes, and should not constitute any limitation to implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic, a mechanical, or another similar form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet sending method, wherein the method is applied to a multicast virtual private network MVPN, the MVPN comprises a first network device and a second network device, the first network device is an ingress node device in the MVPN, the second network device is an egress node device in the MVPN, and the method comprises:
receiving, by the first network device, a first packet sent by a first customer edge CE device, wherein the first packet comprises a first internet protocol version 6 IPv6 header and a first payload, and the first IPv6 header comprises a first source address SA and a first destination address DA;
determining, by the first network device according to a first entry, a first address identifier corresponding to the first SA and the first DA, wherein the first entry comprises a correspondence between the first SA and the first DA and the first address identifier, and the first address identifier is used to indicate the first SA and the first DA;
updating, by the first network device, the first IPv6 header in the first packet to a second IPv6 header to obtain a second packet, wherein the second IPv6 header does not comprise a first SA field and a first DA field, a value of the first SA field is the same as a value of the first SA, and a value of the first DA field is the same as a value of the first DA;
encapsulating, by the first network device, the second packet by using the first address identifier to obtain a first encapsulated packet, wherein the first encapsulated packet comprises the first address identifier, and the first address identifier is located at an outer layer of the second packet; and
sending, by the first network device, the first encapsulated packet to the second network device.

2. The method according to claim 1, wherein the first entry further comprises a first indication flag, and the first indication flag is used to indicate the first network device to update the first IPv6 header to the second IPv6 header; and
the updating, by the first network device, the first IPv6 header in the first packet to a second IPv6 header to obtain a second packet comprises:
updating, by the first network device, the first IPv6 header in the first packet to the second IPv6 header according to the first indication flag to obtain the second packet.

3. The method according to claim 1 or 2, wherein the first address identifier comprises first multi-protocol label switching MPLS.

4. The method according to claim 3, wherein the first address identifier further comprises a bit index explicit replication BIER header.

5. The method according to claim 1 or 2, wherein the first address identifier comprises a third IPv6 header, a third IPv6 address is encapsulated in an SA field in the third IPv6 header, and the third IPv6 address corresponds to the first SA and the first DA.

6. The method according to claim 1 or 2, wherein the first address identifier comprises a fourth IPv6 header, a fourth IPv6 address is encapsulated in a DA field in the fourth IPv6 header, and the fourth IPv6 address corresponds to the first SA and the first DA.

7. The method according to claim 5 or 6, wherein the first address identifier further comprises an IPv6 extension header, and the IPv6 extension header comprises a BIER header.

8. The method according to any one of claims 1 to 7, wherein before the first network device sends the first entry to the second network device, the method further comprises:
allocating, by the first network device, the corresponding first address identifier to the first SA and the first DA.

9. The method according to any one of claims 1 to 8, wherein the first entry further comprises a virtual routing and forwarding VRF identifier corresponding to the first SA and the first DA.

10. The method according to any one of claims 1 to 9, wherein the method further comprises:
sending, by the first network device, the first entry to the second network device.

11. The method according to any one of claims 1 to 10, wherein the method further comprises:
receiving, by the first network device, the first entry sent by the second network device.

12. A packet sending method, wherein the method is applied to a multicast virtual private network MVPN, the MVPN comprises a first network device and a second network device, the first network device is an ingress node device in the MVPN, the second network device is an egress node device in the MVPN, and the method comprises:
receiving, by the second network device, a first encapsulated packet sent by the first network device, wherein the first encapsulated packet comprises a second packet and a first address identifier, the first address identifier is located at an outer layer of the second packet, the second packet comprises a second IPv6 header and a first payload, and the second IPv6 header does not comprise a first SA field and a first DA field;
determining, by the second network device according to a first entry, a first SA and a first DA that correspond to the first address identifier, wherein the first entry comprises a correspondence between the first SA and the first DA and the first address identifier, the first address identifier is used to indicate the first SA and the first DA, a value of the first SA is the same as a value of the first SA field, and a value of the first DA is the same as a value of the first DA field;
updating, by the second network device, the second IPv6 header to a first IPv6 header to obtain a first packet, wherein the first IPv6 header comprises the first SA field and the first DA field; and
sending, by the second network device, the first payload in the first packet to a second customer edge CE device based on the first SA and the first DA field in the first IPv6 header.

13. The method according to claim 12, wherein the first entry further comprises a first indication flag corresponding to the first SA and the first DA, and the first indication flag is used to indicate the first network device to update the first IPv6 header to the second IPv6 header; and
the updating, by the second network device, the second IPv6 header to a first IPv6 header to obtain a first packet comprises:
updating, by the second network device, the second IPv6 header to the first IPv6 header according to the first indication flag to obtain the first packet.

14. The method according to claim 12 or 13, wherein the first address identifier comprises first multi-protocol label switching MPLS.

15. The method according to claim 14, wherein the first address identifier further comprises a bit index explicit replication BIER header.

16. The method according to claim 12 or 13, wherein the first address identifier comprises a third IPv6 header, a third IPv6 address is encapsulated in a source address SA field in the third IPv6 header, and the third IPv6 address corresponds to the first SA and the first DA.

17. The method according to claim 12 or 13, wherein the first address identifier comprises a fourth IPv6 header, a fourth IPv6 address is encapsulated in a destination address DA field in the fourth IPv6 header, and the fourth IPv6 address corresponds to the first SA and the first DA.

18. The method according to claim 16 or 17, wherein the first address identifier further comprises an IPv6 extension header, and the IPv6 extension header comprises a BIER header.

19. The method according to any one of claims 12 to 18, wherein before the second network device sends the first entry to the first network device, the method further comprises:
allocating, by the second network device, the corresponding first address identifier to the first SA and the first DA.

20. The method according to any one of claims 12 to 19, wherein the first entry further comprises a virtual routing and forwarding VRF identifier corresponding to the first SA and the first DA.

21. The method according to any one of claims 12 to 20, wherein the method further comprises:
receiving, by the second network device, the first entry sent by the first network device.

22. The method according to any one of claims 12 to 21, wherein the method further comprises:
sending, by the second network device, the first entry to the first network device.

23. A first network device, wherein the first network device is an ingress node device in a multicast virtual private network MVPN, and the first network device comprises:
a receiving module, configured to receive a first packet sent by a first customer edge CE device, wherein the first packet comprises a first internet protocol version 6 IPv6 header and a first payload, and the first IPv6 header comprises a first source address SA and a first destination address DA;
a determining module, configured to determine, according to a first entry, a first address identifier corresponding to the first SA and the first DA, wherein the first entry comprises a correspondence between the first SA and the first DA and the first address identifier, and the first address identifier is used to indicate the first SA and the first DA;
an update module, configured to update the first IPv6 header in the first packet to a second IPv6 header to obtain a second packet, wherein the second IPv6 header does not comprise a first SA field and a first DA field, a value of the first SA field is the same as a value of the first SA, and a value of the first DA field is the same as a value of the first DA;
an encapsulation module, configured to encapsulate the second packet by using the first address identifier to obtain a first encapsulated packet, wherein the first encapsulated packet comprises the first address identifier, and the first address identifier is located at an outer layer of the second packet; and
a sending module, configured to send the first encapsulated packet to a second network device, wherein the second network device is an egress node device in the MVPN.

24. The first network device according to claim 23, wherein the first entry further comprises a first indication flag, and the first indication flag is used to indicate the first network device to update the first IPv6 header to the second IPv6 header; and
the update module is specifically configured to update the first IPv6 header in the first packet to the second IPv6 header according to the first indication flag to obtain the second packet.

25. The first network device according to claim 23 or 24, wherein the first address identifier comprises first multi-protocol label switching MPLS.

26. The first network device according to claim 25, wherein the first address identifier further comprises a bit index explicit replication BIER header.

27. The first network device according to claim 23 or 24, wherein the first address identifier comprises a third IPv6 header, a third IPv6 address is encapsulated in an SA field in the third IPv6 header, and the third IPv6 address corresponds to the first SA and the first DA.

28. The first network device according to claim 23 or 24, wherein the first address identifier comprises a fourth IPv6 header, a fourth IPv6 address is encapsulated in a DA field in the fourth IPv6 header, and the fourth IPv6 address corresponds to the first SA and the first DA.

29. The first network device according to claim 27 or 28, wherein the first address identifier further comprises an IPv6 extension header, and the IPv6 extension header comprises a BIER header.

30. The first network device according to any one of claims 23 to 29, wherein the first network device further comprises:
an allocation module, configured to allocate the corresponding first address identifier to the first SA and the first DA.

31. The first network device according to any one of claims 23 to 30, wherein the first entry further comprises a virtual routing and forwarding VRF identifier corresponding to the first SA and the first DA.

32. A second network device, wherein the second network device is an egress node device in a multicast virtual private network MVPN, and the second network device comprises:
a receiving module, configured to receive a first encapsulated packet sent by a first network device, wherein the first encapsulated packet comprises a second packet and a first address identifier, the first address identifier is located at an outer layer of the second packet, the second packet comprises a second IPv6 header and a first payload, the second IPv6 header does not comprise a first SA field and a first DA field, and the first network device is an ingress node device in the MVPN;
a determining module, configured to determine, according to a first entry, a first SA and a first DA that correspond to the first address identifier, wherein the first entry comprises a correspondence between the first SA and the first DA and the first address identifier, the first address identifier is used to indicate the first SA and the first DA, a value of the first SA is the same as a value of the first SA field, and a value of the first DA is the same as a value of the first DA field;
an update module, configured to update the second IPv6 header to a first IPv6 header to obtain a first packet, wherein the first IPv6 header comprises the first SA field and the first DA field; and
a sending module, configured to send the first payload in the first packet to a second customer edge CE device based on the first SA and the first DA field in the first IPv6 header.

33. The second network device according to claim 32, wherein the first entry further comprises a first indication flag corresponding to the first SA and the first DA, and the first indication flag is used to indicate the first network device to update the first IPv6 header to the second IPv6 header; and
the update module is specifically configured to update the second IPv6 header to the first IPv6 header according to the first indication flag to obtain the first packet.

34. The second network device according to claim 32 or 33, wherein the first address identifier comprises first multi-protocol label switching MPLS.

35. The second network device according to claim 34, wherein the first address identifier further comprises a bit index explicit replication BIER header.

36. The second network device according to claim 32 or 33, wherein the first address identifier comprises a third IPv6 header, a third IPv6 address is encapsulated in a source address SA field in the third IPv6 header, and the third IPv6 address corresponds to the first SA and the first DA.

37. The second network device according to claim 32 or 33, wherein the first address identifier comprises a fourth IPv6 header, a fourth IPv6 address is encapsulated in a destination address DA field in the fourth IPv6 header, and the fourth IPv6 address corresponds to the first SA and the first DA.

38. The second network device according to claim 36 or 37, wherein the first address identifier further comprises an IPv6 extension header, and the IPv6 extension header comprises a BIER header.

39. The second network device according to any one of claims 32 to 38, wherein the second network device further comprises:
an allocation module, configured to allocate the corresponding first address identifier to the first SA and the first DA.

40. The second network device according to any one of claims 32 to 39, wherein the first entry further comprises a virtual routing and forwarding VRF identifier corresponding to the first SA and the first DA.
